(19) Europäisches Patentamt
European Patent Office
Office européen des brevets

(11) **EP 3 193 502 B1**

(12) **EUROPÄISCHE PATENTSCHRIFT**

(45) Veröffentlichungstag und Bekanntmachung des Hinweises auf die Patenterteilung:
**16.06.2021   Patentblatt 2021/24**

(51) Int Cl.:
**G03B 21/00** *(2006.01)*      **H04N 9/31** *(2006.01)*

(21) Anmeldenummer: **17150958.1**

(22) Anmeldetag: **11.01.2017**

(54) **PROJEKTOR ZUM PROJIZIEREN VON BILDERN**

PROJECTOR FOR PROJECTING IMAGES

PROJECTEUR D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.01.2016   DE 102016100592**

(43) Veröffentlichungstag der Anmeldung:
**19.07.2017   Patentblatt 2017/29**

(73) Patentinhaber: **Carl Zeiss Jena GmbH 07745 Jena (DE)**

(72) Erfinder:
• **Moffat, Bryce Anton 07743 Jena (DE)**
• **Nieten, Christoph 07745 Jena (DE)**
• **Geissler, Enrico 07749 Jena (DE)**
• **Gratzke, Alexander 07745 Jena (DE)**
• **Krause, Axel 07751 Jena (DE)**

(74) Vertreter: **Patentanwälte Geyer, Fehners & Partner mbB Perhamerstrasse 31 80687 München (DE)**

(56) Entgegenhaltungen:
**WO-A1-2009/156129      WO-A1-2009/156130 WO-A1-2009/156131      DE-A1-102008 029 921 US-A1- 2015 378 085**

**Beschreibung**

Die vorliegende Erfindung betrifft einen Projektor zum Projizieren von Bildern gemäß dem Oberbegriff des Anspruches 1.

Solche Projektoren sind z.B. aus der WO 2009/156129 A1 bekannt und werden eingesetzt, um die nicht zu vermeidende Untergrundhelligkeit möglichst gering zu halten, was zu einer besseren Darstellung von schwarzen Bildinhalten (mit der Helligkeit Null) führt. Jedoch besteht die Schwierigkeit, dass bei dunklen Bildinhalten die untersten Eingabe-Graustufen (also die Grauwerte, die sich an den Grauwert = Null = Schwarz anschließen) im projizierten Bild nicht mehr gegenüber der verbleibenden Untergrundhelligkeit unterscheidbar darstellbar sind. Es wird sich hier oft mit einem sogenannten zeitlichen Dithering und/oder räumlichen Dithering beholfen. Bei einem zeitlichen Dithering wird der darzustellende Grauwert nur über mehrere nacheinander projizierte Bilder (bzw. Einzelbilder oder Frames), die jeweils für eine vorbestimmte Einzelbilddauer erzeugt werden, gemittelt richtig dargestellt. Das bedeutet, dass z. B. bei fünf aufeinanderfolgenden Einzelbildern das entsprechende Pixel nur in zwei oder drei Einzelbildern eingeschaltet wird und in den anderen Einzelbildern ausgeschaltet wird. Gemittelt über die fünf Einzelbilder kann dann der gewünschte Grauwert einigermaßen gut dargestellt werden. Bei einem räumlichen bzw. örtlichen Dithering erfolgt die Mittelung über das An- und Ausschalten von benachbarten Pixeln in einem einzigen Frame. Mit einem solchen Dithering können einerseits auch nicht alle Grauwerte dargestellt werden. Gerade die Grauwerte, die sich an den Grauwert Null anschließen, sind so nicht darstellbar. Andererseits erzeugt das Dithering ein Flirren, das viele Betrachter als störend empfinden. Ferner ist es möglich, örtliches und zeitliches Dithering zu kombinieren, und diese über aufeinanderfolgende Frames zu variieren, um das "Dither-Muster" zu kaschieren - was aber auch zum Flirren führt. US2015378085 offenbart eine richtungsabhängige Sichtschutzanzeige. WO2009156130 - Es wird bereitgestellt ein Projektionssystem mit einer ersten Kippspiegelmatrix, einer zweiten Kippspiegelmatrix und einer Abbildungsoptik, die die erste Kippspiegelmatrix auf die zweite Kippspiegelmatrix abbildet, wobei jede Kippspiegelmatrix jeweils mehrere Kippspiegel aufweist, deren Kippachsen in einer Modulatorfläche liegen, bei dem die Abbildungsoptik eine erste Linse sowie einen Abbildungsspiegel umfaßt und daß der Abbildungsspiegel eine Aperturblende der Abbildungsoptik bildet, wobei die Apertublende mit der Normalen der Modulatorfläche der ersten Kippspiegelmatrix ohne etwaige Strahlengangfaltungen einen Winkel von ungleich 90° einschließt.

Diese Schwierigkeiten führen insbesondere auch dann zu einem schlechteren Bildeindruck, wenn mehrere Projektoren zum Projizieren eines großen Gesamtbildes eingesetzt werden, wobei in diesem Fall die projizierten Bilder im Randbereich überlappend projiziert werden, um einen durchgehenden Bildeindruck bereitzustellen. Wenn nun in diesem Randbereich ein solch geringer Grauwert darzustellen ist, führt dies aufgrund der zu hoch dargestellten Helligkeit durch jeden der beiden Projektoren zu noch höheren Helligkeiten bei geringen Eingangshelligkeiten.

Ausgehend hiervon ist es Aufgabe der Erfindung, einen Projektor zum Projizieren von Bildern bereitzustellen, mit dem die beschriebenen Schwierigkeiten möglichst vollständig behoben werden können.

Erfindungsgemäß wird die Aufgabe mit einem Projektor der eingangs genannten Art dadurch gelöst, dass die Steuereinheit die Modulatoren so ansteuert, dass für zumindest ein zweites Pixel, das gemäß den Bilddaten einen Helligkeitswert darstellen soll, der größer als Null sowie kleiner oder gleich einem vorbestimmten ersten Schwellwert ist, das bzw. die zugeordneten ersten Pixel mindestens zu den Zeitabschnitten, in denen das zweite Pixel in den ersten Zustand geschaltet wird, in den zweiten Zustand geschaltet ist bzw. sind, so dass keine aktive Beleuchtung erfolgt und das zumindest eine zweite Pixel das Restlicht moduliert.

Durch die Modulation des Restlichts wird quasi die Untergrundhelligkeit selbst moduliert, so dass eine unterscheidbare Darstellung von sehr geringen Grauwerten und insbesondere Grauwerten beginnend mit Werten größer Null möglich ist.

Bevorzugt moduliert das zumindest eine zweite Pixel nur das Restlicht zur Erzeugung des Bildes bzw. während einer Einzelbilddauer des zu erzeugenden Bildes.

Unter dem Helligkeitswert gemäß den Bilddaten wird hier insbesondere ein Eingabe-Grauwert bzw. Ansteuerwert für die Modulatoren verstanden, der ein Wert aus einem festgelegten Wertebereich ist. So kann der Wertebereich z.B. nur ganzzahlige Werte von 0 bis 255 aufweisen, wobei Null die geringste Helligkeit und somit schwarz und 255 die größte Helligkeit sein soll. Bei einer farbigen oder mehrfarbigen Darstellung gilt dies für jede Farbe des zu erzeugenden Farbbildes oder Farbteilbildes.

Insbesondere kann die Steuereinheit das das Restlicht modulierende zweite Pixel basierend auf einem erhöhten Helligkeitswert, der größer ist als der Helligkeitswert gemäß den Bilddaten, ansteuern. Das das Restlicht modulierende zweite Pixel kann daher als geboostetes Pixel bezeichnet werden. Durch die Erhöhung des darzustellenden Helligkeitswertes wird der Tatsache Rechnung getragen, dass die Untergrundhelligkeit relativ gering ist. Damit ist eine gute Darstellung von kleinen Grauwerten möglich.

Die Steuereinheit kann das das Restlicht modulierende zweite Pixel so ansteuern, dass der erhöhte Helligkeitswert bzw. Ansteuerwert mindestens das 10-fache des Helligkeitswerts gemäß den Bilddaten bei einer angenommenen Unterteilung des Bereiches von minimaler bis maximaler Helligkeit in 256 Stufen entspricht. Der Faktor kann auch größer als 10 sein. Insbesondere liegt er bevorzugt im Bereich von 10 bis 50, 15 bis 45, 20 bis 40, 25 bis 45 oder 28 bis 38. Bevorzugte Werte für den Faktor sind 18, 25, 36 und 46. Insbesondere kann der Wert des Faktors in Abhängigkeit des Kontrastes des Projektors gewählt werden.

Bei einem Kontrast von 500:1 kann z.B. ein Faktor von 18 gewählt werden. Bevorzugt wird dieser Faktor für die Helligkeitswerte von 1 bis 14 angewendet.

Bei einem Kontrast von 1000:1 kann z.B. ein Faktor von 25 gewählt werden. Bevorzugt wird dieser Faktor für die Helligkeitswerte von 1 bis 10 angewendet.

Bei einem Kontrast von 2000:1 kann z.B. ein Faktor von 36 gewählt werden. Bevorzugt wird dieser Faktor für die Helligkeitswerte von 1 bis 7 angewendet.

Bei einem Kontrast von 4000:1 kann z.B. ein Faktor von 46 gewählt werden. Bevorzugt wird dieser Faktor für die Helligkeitswerte von 1 bis 5 oder von 1 bis 6 angewendet.

Es wird somit bevorzugt ein größerer Faktor mit höherem Kontrast gewählt.

Es muss sich dabei um keinen festen Faktor für alle boostbaren Grauwerte (Helligkeitswerte, die größer als Null und kleiner gleich dem vorbestimmten ersten Schwellwert sind) handeln. Für jeden boostbaren Grauwert kann ein individueller Faktor festgelegt sein.

Insbesondere steuert die Steuereinheit die beiden Modulatoren mittels pulsweitenmodulierter Steuerdaten an. Damit ist eine sehr akkurate Ansteuerung möglich. Insbesondere kann die Ansteuerung der beiden Modulatoren gut synchronisiert werden.

Die Steuereinheit kann als das zumindest eine zweite Pixel ein solches zweites Pixel bestimmen, dessen durch die Bilddaten vorgegebene Helligkeitswert größer als Null und kleiner gleich dem ersten Schwellwert ist.

Ferner kann die Steuereinheit das zumindest eine zweite Pixel, das das Restlicht moduliert, durch folgende Schritte bestimmen:

a) es wird zumindest ein zweites Pixel ausgewählt, dessen durch die Bilddaten vorgegebener Helligkeitswert größer als Null und kleiner gleich dem ersten Schwellwert ist, und

b) es wird ein ausgewähltes zweites Pixel als ein das Restlicht modulierendes zweites Pixel dann (bevorzugt nur dann) bestimmt, wenn alle k Nachbarpixel (bevorzugt in einer Richtung, also erstes direktes Nachbarpixel, zweites Nachbarpixel, das der direkte Nachbar zum ersten direkten Nachbarpixel ist, etc.) im Schritt a) ausgewählt werden. Dabei ist k eine natürlich Zahl größer oder gleich 1.

Die Steuereinheit kann das zumindest eine zweite Pixel, das das Restlicht moduliert, durch folgende Schritte bestimmen:

a) es wird zumindest ein zweites Pixel ausgewählt, dessen durch die Bilddaten vorgegebener Helligkeitswert größer als Null und kleiner gleich dem ersten Schwellwert ist, und

b) es wird ein ausgewähltes zweites Pixel als ein das Restlicht modulierendes zweites Pixel dann (bevorzugt nur dann) bestimmt, wenn alle zugeordneten ersten Pixel aufgrund der Bilddaten jeweils gemäß eines Helligkeitswertes angesteuert werden, der kleiner ist als ein vorbestimmter zweiter Schwellwert, wobei der zweite Schwellwert so gewählt ist, dass sich der bzw. die Zeitabschnitte, zu denen die zugeordneten ersten Pixel in den ersten Zustand zu schalten sind, nicht mit dem oder den Zeitabschnitten überlappen, zu denen das das Restlicht modulierende zweite Pixel in den ersten Zustand zu schalten ist, um das Restlicht zu modulieren.

Es wird somit eine zeitliche Trennung der Beleuchtung von geboosteten Pixeln und nicht geboosteten Pixeln erreicht, was an der Grenze zwischen einem boostbaren Pixel und einem nicht geboosteten Pixel in vorteilhafter Weise dazu genutzt werden kann, das geboostete Pixel, das am Rand liegt, sicher nicht zu beleuchten (mit keinem der ihm zugeordneten ersten Pixeln), und das nicht geboostete Pixel, das am Rand liegt, ausreichend zu beleuchten, obwohl zumindest ein Beleuchtungspixel des nicht geboosteten Pixels auch das geboostete Pixel beleuchtet (aber nur zu Zeiten, zu denen das geboostete Pixel in den zweiten Zustand geschaltet ist).

Der Schritt b) kann bevorzugt nur für boostbare zweite Pixel (= im Schritt a) ausgewählte Pixel) durchgeführt werden, deren k-tes Nachbarpixel (jeweils bevorzugt in einer Richtung, also erstes, direktes Nachbarpixel, zweites Nachbarpixel, das der direkte Nachbar zum ersten direkten Nachbarpixel ist, etc.) nicht boostbar ist (gemäß Schritt a)). Die ersten Nachbarpixel können das betrachtete boostbare zweite Pixel in ringförmiger Art umgeben. Die zweiten Nachbarpixel können sowohl das betrachtete boostbare zweite Pixel sowie die ersten Nachbarpixel ringförmig umgeben. Dies gilt in gleicher Weise für dritte, vierte und weitere Nachbarpixel. Dabei ist k eine natürliche Zahl größer oder gleich 1. Wenn alle 1 bis k Nachbarpixel eines boostbaren zweiten Pixels boostbar sind, kann das zweite Pixel geboostet werden (= ausgewähltes zweites Pixel). Mit der Wahl von k kann insbesondere das vom boostbaren zweiten Pixel weitest entfernte zweite Pixel festgelegt werden, bei dessen aktiver Beleuchtung noch Licht (insbesondere in einem solchen Umfang oder mit einem solchen Anteil) auf das boostbare zweite Pixel fällt, das bei der Restlichtmodulation durch das boostbare zweite Pixel störend wäre. Wenn jedem zweiten Pixel ein erstes Hauptbeleuchtungspixel und dazu (in einer Richtung) n Nachbarpixel zugeordnet sind, wobei n eine natürlich Zahl größer oder gleich 1 ist, wird k bevorzugt gleich n gesetzt.

Für die Ansteuerung der ersten Pixel kann aufgrund der Bilddaten der Helligkeitswert gewählt werden, der von allen zweiten Pixeln, dem das erste Pixel zugeordnet ist, der höchste ist.

Mit dem erfindungsgemäßen Projektor können die Bilder bevorzugt jeweils für eine vorbestimmte Einzelbilddauer projiziert werden. Insbesondere kann bzw. können das bzw. die dem zumindest einen zweiten Pixel zugeordneten erste Pixel während der gesamten Einzelbilddauer in den zweiten Zustand geschaltet sein.

Bei dem erfindungsgemäßen Projektor kann jedem zweiten Pixel genau ein erstes Pixel zugeordnet sein. Es ist jedoch auch möglich, dass jedem zweiten Pixel ein erstes Pixel sowie zumindest ein diesem ersten Pixel direkt benachbartes weiteres erstes Pixel zugeordnet ist. Ferner können jedem zweiten Pixel ein erstes Pixel sowie zumindest die diesem ersten Pixel direkt benachbarten weiteren ersten Pixel zugeordnet sein. Es können nicht nur die direkt benachbarten weiteren ersten Pixel zugeordnet sein, sondern auch die jeweils weiteren Nachbarn. Man kann auch sagen, dass jedem zweiten Pixel ein erstes Pixel sowie weitere erste Pixel, die von diesem ersten Pixel um nicht mehr als n Pixel beabstandet sind, zugeordnet sind. Bei n handelt es sich um eine natürlich Zahl von größer oder gleich 1. Die zugeordneten ersten Pixel zeichnen sich insbesondere dadurch aus, dass das von ihnen kommende Licht mittels der Abbildungsoptik zumindest zum Teil auf das zweite Pixel, dem das erste Pixel zugeordnet ist, abgebildet wird.

Ferner kann die Steuereinheit bei dem erfindungsgemäßen Projektor für zweite Pixel, die gemäß den Bilddaten einen Helligkeitswert darstellen sollen, der größer ist als der erste Schwellwert, die Resthelligkeit in der Weise berücksichtigen, dass das zweite Pixel basierend auf einem verringerten Helligkeitswert, der niedriger ist als der Helligkeitswert gemäß den Bilddaten, angesteuert wird. Dabei sind die zweiten Pixel bei der Erzeugung des Bildes jedoch bevorzugt zumindest zeitweise gleichzeitig mit zumindest einem zugeordneten ersten Pixel in den ersten Zustand geschaltet. Somit kann die Resthelligkeit mit berücksichtigt werden, die mittels des zweiten Pixels mitmoduliert wird, so dass genauere Grauwerte darstellbar sind.

Dies ist insbesondere vorteilhaft für Helligkeitswerte, die zwar größer als der erste Schwellwert sind, die jedoch kleiner oder gleich als 20 % oder 30 % des maximalen Helligkeitswertes sind.

Bei den Modulatoren handelt es sich bevorzugt um reflektive Modulatoren. Insbesondere sind die Modulatoren als Kippspiegelmatrizen ausgebildet.

Sofern hier von Grauwerten bzw. Helligkeitswerten die Rede ist, ist dies bei einer monochromen Darstellung als Grauwert der monochromen Farbe zu verstehen. Bei mehrfarbigen Darstellungen sind die Grauwerte als Helligkeitswerte der entsprechenden dargestellten Farben zu verstehen.

Der erfindungsgemäße Projektor kann insbesondere für eine mehrfarbige Bilddarstellung ausgebildet sein. Dazu kann beispielsweise eine mehrfarbige Beleuchtung vorgesehen sein, die zeitlich nacheinander verschiedene Grundfarben auf den ersten Modulator richtet. Bei den Grundfarben kann es sich um die Farben Rot, Grün und Blau handeln. Der zeitliche Wechsel der Grundfarben wird so schnell durchgeführt, dass für einen Betrachter die zeitlich nacheinander erzeugten Farbteilbilder (z. B. in den Farben Rot, Grün und Blau) nicht zu unterscheiden sind und der Betrachter somit nur ein mehrfarbiges Bild wahrnimmt. Zur Erzeugung der zeitlich aufeinander folgenden Farben kann zwischen der Lichtquelle (die z. B. weißes Licht abgibt) des Projektors und dem ersten Modulator ein sogenanntes Farbrad angeordnet sein, das verschiedene Farbfilter nacheinander in den Strahlengang zwischen der Lichtquelle und dem ersten Modulator einbringt. Es ist jedoch auch jede andere Art der zeitsequentiellen Farberzeugung möglich.

Des Weiteren ist auch eine mehrfarbige Beleuchtung des ersten Modulators möglich, wenn z. B. drei zweite Modulatoren vorgesehen sind, die dann mit den einzelnen Farben (z. B. Rot, Grün und Blau) beleuchtet werden. Dazu können beispielsweise Farbteilwürfel eingesetzt werden. Die drei zweiten Modulatoren erzeugen dann die Farbteilbilder, die mittels der Projektionsoptik in überlagernder Weise auf die Projektionsfläche projiziert werden, um das gewünschte mehrfarbige Bild zu erzeugen. Natürlich können auch mehr oder weniger als drei zweite Modulatoren vorgesehen sein.

Die Aufgabe wird ferner gelöst durch ein Projektor zum Projizieren von Bildern gemäß der eingangs genannten Art, bei dem die Steuereinheit die Modulatoren so ansteuert, dass für zumindest ein zweites Pixel, das gemäß den Bilddaten einen Helligkeitswert darstellen soll, der größer als Null sowie kleiner gleich einem vorbestimmten ersten Schwellwert ist, das zumindest eine zweite Pixel in den zweiten Zustand geschaltet wird und das bzw. die zugeordneten ersten Pixel nur während des bzw. der Zeitabschnitte, in denen das zweite Pixel in den zweiten Zustand geschaltet wird, in den ersten Zustand geschaltet wird bzw. werden, so dass dann vom zumindest einen zweiten Pixel moduliertes Restlicht ausgeht, das zur Bilderzeugung beiträgt.

Auch bei diesem Projektor wird das nicht zu vermeidende Restlicht moduliert, um geringe Grauwerte darzustellen. Die Modulation des Restlichtes erfolgt jedoch über den ersten Modulator. Der zweite Modulator wird nur genutzt, um das nicht zu vermeidende Restlicht, das dann moduliert ist, zur Bildprojektion bereitzustellen. Es wird also wiederum das nicht zu vermeidende Restlicht in positiver Weise für die Darstellung geringer Helligkeitswerte genutzt.

Bei dem erfindungsgemäßen Projektor kann die Steuereinheit zur Erzeugung des modulierten Restlichtes das bzw. die zugeordneten ersten Pixel basierend auf einem erhöhten Helligkeitswert, der größer ist als der Helligkeitswert gemäß den Bilddaten, ansteuern. Das bzw. die zugeordneten ersten Pixel werden somit geboostet. Dieser erfindungsgemäße Projektor, bei dem das bzw. die zugeordneten ersten Pixel geboostet werden, kann in gleicher bzw. ähnlicher Art und Weise weitergebildet werden wie der eingangs beschriebene erfindungsgemäße Projektor.

Natürlich können auch beide beschriebenen erfindungsgemäßen Projektoren (einschließlich ihren Weiterbildungen) so kombiniert werden, dass zeitlich nacheinander zweite Pixel und erste Pixel in der beschriebenen Art und Weise geboostet werden.

Ferner wird ein Projektor zum Projizieren von Bildern der eingangs genannten Art bereitgestellt, bei dem die Steuereinheit für zweite Pixel die Resthelligkeit in der Weise berücksichtigt, dass das zweite Pixel basierend auf einem verringerten Helligkeitswert, der niedriger ist als der Helligkeitswert gemäß den Bilddaten, angesteuert wird. Insbesondere sind die zweiten Pixel, die mit dem verringerten Helligkeitswert angesteuert werden, zumindest zeitweise gleichzeitig mit zumindest einem zugeordneten ersten Pixel in den ersten Zustand geschaltet. Es wird also hauptsächlich bei aktiver Beleuchtung des zweiten Pixels moduliert. Zusätzlich wird aber die Modulation des nicht zu vermeidenden Restlichtes für die gewünschte Helligkeit berücksichtigt, was zu genaueren Helligkeitswerten führt. Dies ist insbesondere vorteilhaft für geringe Helligkeitswerte, die z. B. kleiner oder gleich 30 % des maximalen Helligkeitswertes, oder kleiner gleich 20 % des maximalen Helligkeitswertes sind.

Die Abbildungsoptik kann insbesondere als 1:1-Abbildungsoptik ausgebildet sein. Sie kann jedoch auch als vergrößernde oder verkleinernde Abbildungsoptik ausgebildet sein.

Bevorzugt wird durch die Abbildungsoptik eine 1:1-Zuordnung zwischen ersten und zweiten Pixeln bereitgestellt. Aufgrund der tatsächlichen Realisierung der Modulatoren und/oder der Abbildungsoptik kann bei der aktiven Beleuchtung auch Licht von benachbarten ersten Pixeln auf das gemäß der 1:1-Zuordnung zugeordnete zweite Pixel abgebildet werden.

Es ist jedoch auch möglich, z. B. mittels der Abmessungen der eingesetzten Modulatoren und/oder ihrer Anordnung dafür zu sorgen, dass stets das Licht von mehreren ersten Pixeln auf ein zweites Pixel abgebildet wird.

Der erfindungsgemäße Projektor (hier wird explizit jeder der oben beschriebenen erfindungsgemäßen Projektoren gemeint) kann die Lichtquelle als Bestandteil des Projektors aufweisen. Des Weiteren kann der erfindungsgemäße Projektor dem Fachmann bekannte weitere Mittel aufweisen, die zum Betrieb des Projektors notwendig sind.

Ferner wird ein Projektionssystem bereitgestellt, bei dem zumindest zwei erfindungsgemäße Projektoren so betrieben werden, dass ihre projizierten Bilder teilweise überlappen, um ein größeres Gesamtbild zu erzeugen. Ein solches Projektionssystem kann beispielsweise für eine Kuppelprojektion (z. B. in Planetarien) oder für Flugsimulatoren oder sonstige Simulatoren (für z. B. PKW, LKW, Motorrad, etc.) eingesetzt werden.

Es wird ferner ein Verfahren zum Projizieren von Bildern bereitgestellt, bei dem ein Projektor der eingangs genannten Art so betrieben wird, dass die Steuereinheit die Modulatoren so ansteuert, dass für zumindest ein zweites Pixel, das gemäß den Bilddaten einen Helligkeitswert darstellen soll, der größer als Null sowie kleiner gleich einem vorbestimmten ersten Schwellwert ist, das bzw. die zugeordneten ersten Pixel mindestens zu den Zeitabschnitten, in denen das zweite Pixel in den ersten Zustand geschaltet wird, in den zweiten Zustand geschaltet ist bzw. sind, so dass keine aktive Beleuchtung erfolgt und das zweite Pixel das Restlicht moduliert.

Bevorzugt moduliert das zumindest eine zweite Pixel nur das Restlicht zur Erzeugung des Bildes bzw. während einer Einzelbilddauer des zu erzeugenden Bildes.

Des Weiteren wird ein Verfahren zum Projizieren eines Bildes mit einem Projektor der eingangs genannten Art bereitgestellt, bei dem die Steuereinheit die Modulatoren so ansteuert, dass für zumindest ein zweites Pixel, das gemäß den Bilddaten einen Helligkeitswert darstellen soll, der größer als Null sowie kleiner oder gleich einem vorbestimmten ersten Schwellwert ist, das zumindest eine zweite Pixel in den zweiten Zustand geschaltet wird und das bzw. die zugeordneten ersten Pixel nur während des bzw. der Zeitabschnitte, in denen das zweite Pixel in den zweiten Zustand geschaltet wird, in den ersten Zustand geschaltet wird bzw. werden, so dass dann vom zumindest einen zweiten Pixel moduliertes Restlicht ausgeht, das zur Bilderzeugung beiträgt.

Des Weiteren wird ein Verfahren zum Projizieren von Bildern bereitgestellt, bei dem ein Projektor der eingangs genannten Art so betrieben wird, dass die Steuereinheit für zweite Pixel die Resthelligkeit in der Weise berücksichtigt, dass das zweite Pixel basierend auf einem verringerten Helligkeitswert, der niedriger ist als der Helligkeitswert gemäß den Bilddaten, angesteuert wird.

Bevorzugt wird das zweite Pixel, das mit einem verringerten Helligkeitswert angesteuert wird, zumindest zeitweise gleichzeitig mit zumindest einem zugeordneten ersten Pixel in den ersten Zustand geschaltet. Somit wird das zweite Pixel aktiv beleuchtet und moduliert das Beleuchtungslicht, wobei gleichzeitig das nicht zu vermeidende Restlicht berücksichtigt wird.

Die erfindungsgemäßen Verfahren können in entsprechender Weise wie die erfindungsgemäßen Vorrichtungen bzw. Projektoren weitergebildet werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

| | |
|---|---|
| Fig. 1 | eine schematische Darstellung einer Ausführungsform des erfindungsgemäßen Projektors; |
| Fig. 2 | eine schematische Darstellung zur Erläuterung der Zuordnung zwischen den ersten Pixeln des ersten Modulators 3 und den zweiten Pixeln des zweiten Modulators 5; |
| Fig. 3 | eine schematische Darstellung der Steuereinheit 7 von Fig. 1 zur Erläuterung der Erzeugung von pulsweitenmodulierten Muster- und Bildsteuerdaten MS, BS; |
| Fig. 4 | eine schematische Darstellung eines bekannten Projektors mit Einfachmodulation; |
| Fig. 5 | eine schematische Darstellung zum Vergleich der theoretischen $\gamma$-Kurve mit der realen $\gamma$-Kurve des Projektors gemäß Fig. 4; |
| Fig. 6 | eine Darstellung eines bekannten Projektors mit Doppelmodulation; |
| Fig. 7 | eine schematische Darstellung des Farbrads; |
| Fig. 8 | eine Darstellung gemäß Fig. 5, wobei zusätzlich noch die $\gamma$-Kurve des Projektors mit Doppelmodulation eingezeichnet ist; |
| Fig. 9 | eine Darstellung der Abweichung projizierter Grauwerte vom Sollwert für einen Projektor mit Einfachmodulation und einem Projektor mit Doppelmodulation; |
| Fig. 10 | eine Darstellung der Abweichung der projizierten Grauwerte vom Sollwert für die erfindungsgemäßen Varianten Boost1 und Boost2; |
| Fig. 11 | eine Darstellung zur Erläuterung der Zuordnung von mehreren ersten Pixeln des ersten Modulators 3 zu einem zweiten Pixel des zweiten Modulators 5; |
| Fig. 12 | eine schematische Darstellung zur Erläuterung der Bestimmung, ob ein zweites Pixel boostbar ist oder nicht; |
| Fig. 13 | eine schematische Darstellung zur Erläuterung der Ermittlung der Musterdaten M basierend auf den gegebenen Bilddaten BD; |
| Fig. 14 | eine schematische Darstellung zur Erläuterung der Ermittlung der Helligkeitswerte für geboostete und nicht geboostete Pixel sowie die entsprechenden Beleuchtungssteuerdaten MS; |
| Fig. 15 | eine Darstellung zur Erläuterung der Pulsweitenmodulation für den Beleuchtungsmodulator; |
| Fig. 16 | eine Darstellung zur Bestimmung der Helligkeitswerte für die geboosteten Pixel und nicht geboosteten Pixel sowie der zugeordneten Beleuchtungssteuerdaten; |
| Fig. 17a - 17d | Darstellungen zur Erläuterung der Ausnutzung von Zeitabschnitten, in denen die Beleuchtungspixel ausgeschaltet sind, um mehr Bildpixel boosten zu können; |
| Fig. 18 | eine Darstellung gemäß Fig. 16 zur Erläuterung einer Weiterbildung des erfindungsgemäßen Projektors; |
| Fig. 19 | eine schematische Darstellung einer weiteren Ausführungsform des erfindungsgemäßen Projektors, und |
| Fig. 20 | eine schematische Darstellung einer weiteren Ausführungsform des erfindungsgemäßen Projektors. |

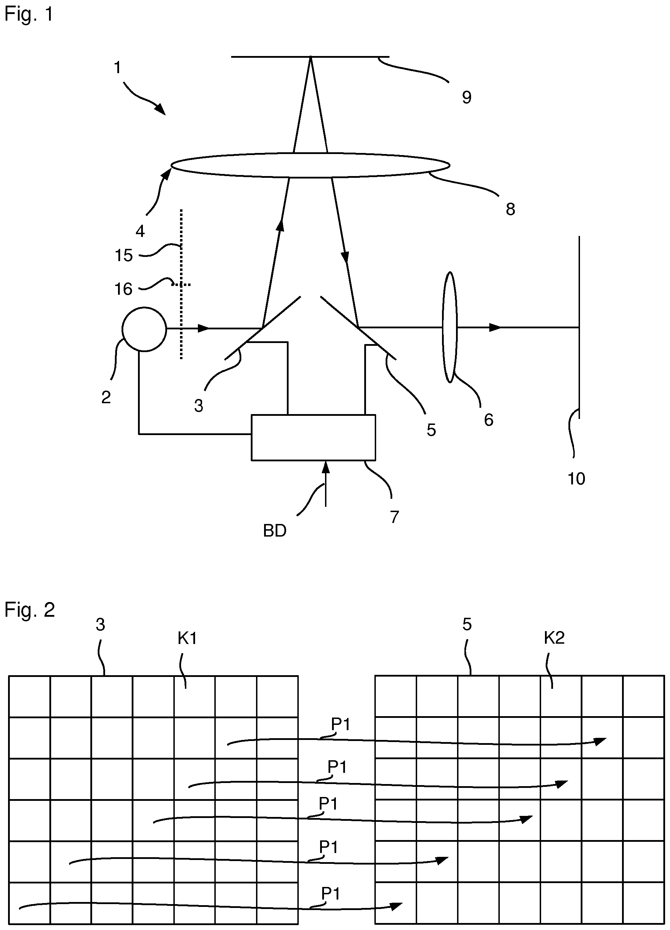

Bei der in Fig. 1 gezeigten Ausführungsform umfasst der erfindungsgemäße Projektor 1 zum Projizieren von Bildern für jeweils eine vorbestimmte Einzelbilddauer eine Lichtquelle 2, einen Beleuchtungsmodulator 3, eine Abbildungsoptik 4, einen Bildmodulator 5, eine Projektionsoptik 6 sowie eine Steuereinheit 7.

Die beiden Modulatoren 3, 5 sind jeweils als Kippspiegelmatrix (nachfolgend auch DMD genannt) ausgebildet, die mehrere in Zeilen und Spalten angeordnete Kippspiegel aufweisen, wobei die Kippspiegel voneinander unabhängig in eine erste und eine zweite Kippstellung gebracht werden können.

Beim beschriebenen Ausführungsbeispiel weist der Beleuchtungsmodulator 3 mehrere Kippspiegel K1 (nachfolgend auch Beleuchtungspixel genannt) und weist der Bildmodulator 5 mehrere Kippspiegel K2 (nachfolgend auch Bildpixel genannt) auf. In Fig. 2 sind jeweils schematisch 6 x 7 Kippspiegel K1, K2 dargestellt ist. Die Kippspiegel K1 und K2 weisen jeweils gleichen Abmessungen auf, wobei die geringe Anzahl der Kippspiegel K1 und K2 lediglich zur Vereinfachung der Darstellung angenommen wird. Natürlich können die Modulatoren 3, 5 sehr viel mehr Kippspiegel K1, K2 als dargestellt enthalten.

Die Abbildungsoptik 4 ist als 1:1-Abbildungsoptik mit einer Linse 8 und einem Spiegel 9 ausgebildet und bildet jeden Kippspiegel K1 des Beleuchtungsmodulators 3 genau auf einen Kippspiegel K2 des Bildmodulators 5 ab, wie durch die Pfeile P1 angedeutet ist. Somit ist jedem Beleuchtungspixel K1 des Beleuchtungsmodulators 3 aufgrund der Abbildung mittels der Abbildungsoptik 4 genau ein Bildpixel K2 des Bildmodulators 5 zugeordnet. Man kann auch sagen, dass jedem Bildpixel K2 genau ein Beleuchtungspixel K1 zugeordnet ist.

Die beiden Modulatoren 3 und 5 werden von der Steuereinheit 7 basierend auf zugeführten Bilddaten BD für jedes der nacheinander zu projizierenden Bilder so angesteuert, dass der Beleuchtungsmodulator 3, der mit dem Licht (z.B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 10 projiziert wird. Um die flächig modulierte Lichtquelle bereitzustellen, ist der Projektor 1 so ausgebildet, dass das Licht, das von den sich in der ersten Kippstellung befindenden Kippspiegeln K1 des Beleuchtungsmodulator 3 reflektiert wird, auf den zugeordneten Kippspiegel K2 des Bildmodulators 5 abgebildet wird. Das von den in der zweiten Kippstellung stehenden Kippspiegeln K1 des Beleuchtungsmodulators 3 reflektierte Licht wird von einer (nicht gezeigten) Strahlenfalle aufgenommen und wird somit nicht auf den Bildmodulator 5 abgebildet. Die Bilderzeugung bzw. -modulation erfolgt dann mittels der Kippstellung der Bildpixel (= Kippspiegel K2 des Bildmodulators 5), da nur das von den in der ersten Kippstellung stehenden Bildpixeln K2 reflektierte Licht über die Projektionsoptik 6 auf die Projektionsfläche 10 projiziert wird. Das von den sich in der zweiten Kippstellung befindenden Bildpixeln K2 reflektierte Licht wird nicht auf die Projektionsfläche 10 projiziert, sondern z.B. in einer (nicht gezeigten) Strahlenfalle aufgenommen. Durch die Kippstellung der Bildpixel K2 wird somit das zu projizierende Bild moduliert bzw. erzeugt, das mittels der Projektionsoptik 6 projiziert wird.

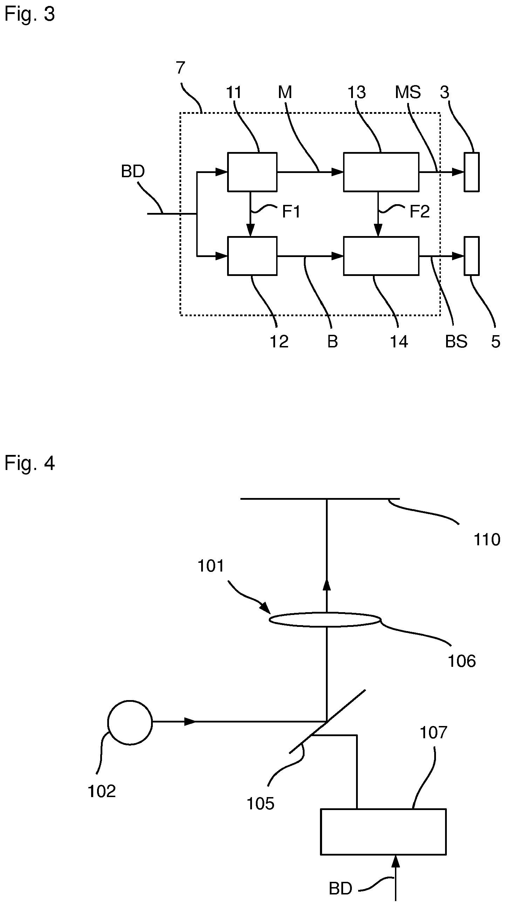

Die Bilddaten BD liegen bereits in digitaler Form mit der geeigneten Pixelauflösung für den Bildmodulator 5 vor und werden in der Steuereinheit 7, wie in Fig. 3 schematisch gezeigt ist, gleichzeitig an einen ersten und zweiten Mustergenerator 11 und 12 angelegt. Der erste Mustergenerator 11 erzeugt anhand der zugeführten Bilddaten BD Musterdaten M, die an eine erste Ansteuerelektronik 13 angelegt werden. Die erste Ansteuerelektronik 13 erzeugt basierend auf den Musterdaten M pulsweitenmodulierte Beleuchtungssteuerdaten MS und legt diese an den Beleuchtungsmodulator 3 an.

Der zweite Mustergenerator 12 erzeugt anhand der zugeführten Bilddaten BD Einzelbilddaten B, die an eine zweite Ansteuerelektronik 14 für den Bildmodulator 5 angelegt werden. Die zweite Ansteuerelektronik 14 erzeugt pulsweitenmodulierte Bildsteuerdaten BS und legt diese an den Bildmodulator 5 an.

Gemäß den Beleuchtungs- und Bildsteuerdaten MS, BS werden während der Einzelbilddauer T zur Erzeugung des Bildes die Beleuchtungs- und Bildpixel K1, K2 so in die erste und zweite Kippstellung gebracht, dass das gewünschte Bild erzeugt und projiziert wird.

Durch das Hintereinanderschalten der beiden Modulatoren 3, 5 sowie die nachfolgend beschriebenen Erzeugung der Beleuchtungs- und Bildsteuerdaten MS, BS wird beim Betrieb des Projektors 1 eine Verbesserung bei der Darstellung von niedrigen Graustufen bzw. geringen Helligkeitswerten erreicht.

Projektor 101 mit Einfachmodulation gemäß Fig. 4

Zum besseren Verständnis des erfindungsgemäßen Projektors 1 wird nachfolgend ein Projektor 101 mit Einfachmodulation, der nur einen Modulator 105, der als Bildmodulator eingesetzt wird, aufweist, beschrieben (Fig. 4). Dieser Projektor 101 mit Einfachmodulation weist eine Lichtquelle 102 und eine Projektionsoptik 106 auf, wobei der Modulator 105, der als Kippspiegelmatrix ausgebildet sein kann, mit Licht der Lichtquelle 102 beleuchtet wird. Der Modulator 105 moduliert das Licht mittels der unabhängig voneinander ansteuerbaren Kippspiegeln des Modulators 105, um ein Bild zu erzeugen, das mittels der Projektionsoptik 106 auf eine Projektionsfläche 110 projiziert wird. Die Modulation wird durch eine Steuereinheit 107 basierend auf zugeführten Bilddaten BD gesteuert. Bei einem solchen herkömmlichen Projektor 101 liegt der Kontrast (maximale Helligkeit zu minimaler Helligkeit) in der Regel zwischen 500:1 und 2000:1. Das bedeutet, dass durch eine Verringerung eines Eingabe-Grauwertes die projizierte Helligkeit nicht gegen Null strebt, sondern sich einem endlichen Wert annähert, der für einen Eingabe-Grauwert 0 erreicht wird und sich aus dem Kontrast des Projektors 101 ergibt. Für die nachfolgende Diskussion wird angenommen, dass die Helligkeitswerte in einem 8 Bit-System mit ganzen Zahlen von 0 bis 255 dargestellt werden, wobei 0 die minimale Helligkeit (schwarz) und 255 die maximale Helligkeit darstellt.

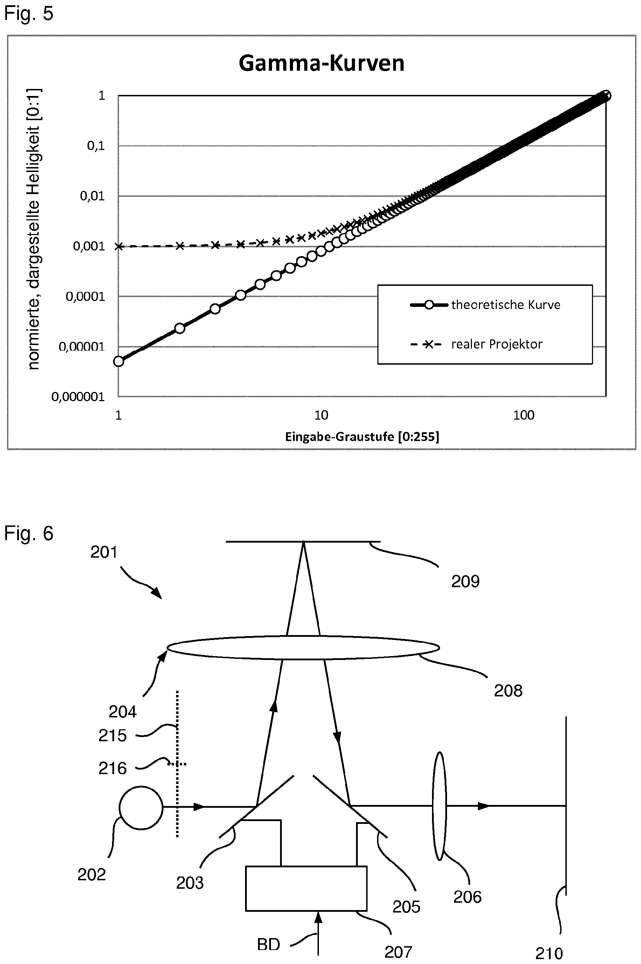

Dies ist in Fig. 5 schematisch dargestellt, wobei die theoretische $\gamma$-Kurve (hier mit $\gamma = 2{,}2$) als durchgezogene Linie mit der realen Kurve für den Projektor 101 mit einem Kontrast von 1000:1 als gestrichelte Linie dargestellt ist. Entlang der x-Achse sind die Eingabe-Graustufen und entlang der y-Achse die nominierte Helligkeit im Bereich von 1E-6 bis 1 dargestellt.

Mathematisch ergibt sich der Helligkeitsverlauf $I_{SdT}$ daraus, dass der endliche Kontrast K zu einer Untergrundhelligkeit von U = 1/K zu der nachfolgenden Gleichung für $I_{SdT}(g)$ führt.

$$I_{SdT}(g) = U + (1 - U) \cdot \left(\frac{g}{255}\right)^{\gamma}$$

Dabei ist g die Eingabe-Graustufe und $\gamma$ ist der sogenannte $\gamma$-Wert für die Beschreibung des Helligkeitsverlaufs. Außerdem ist die maximale Helligkeit (für g = 255) auf 1 normiert. Der theoretische Helligkeitsverlauf ist wie folgt definiert.

$$I_{Theorie}(g) := \left(\frac{g}{255}\right)^{\gamma}$$

Diese nicht zu vermeidende Untergrundhelligkeit U führt dazu, dass bei dunklen Bildinhalten die untersten Eingabe-Graustufen im Bild nicht mehr zu unterscheiden sind, da sie sich gegenüber der Untergrundhelligkeit nicht mehr abheben. So ist bei dem Beispiel gemäß Fig.5 die Graustufe g = 4 gerade einmal 10% heller als der Untergrund bei Graustufe g = 0. Dadurch sinkt der tatsächlich nutzbare Bereich von Graustufen.

Projektor 201 mit Doppelmodulation gemäß Fig. 6

Bei der Verwendung von zwei hintereinandergeschalteten Modulatoren 203 und 205, wie dies bei dem Projektor 201 mit Doppelmodulation in Fig. 6 der Fall ist, erhöht sich nicht nur der Kontrast auf jenseits von 1.000.000:1. Darüber hinaus weisen auch die dunklen Graustufen eine geringere Untergrundhelligkeit auf (da sie mit weniger Intensität beleuchtet werden).

Der Projektor 201 ist grundsätzlich gleich aufgebaut wie der Projektor 1 in Fig. 1. Daher sind gleiche bzw. ähnliche Elemente mit Bezugszeichen bezeichnet, die um 200 größer sind als die entsprechenden Bezugszeichen in Fig. 1. Nachfolgend werden lediglich die Unterschiede beschrieben, die im Wesentlichen die Steuereinheit 207 und die Ansteuerung der Modulatoren 203 und 205 betreffen. Für den Projektor 201 gemäß Fig. 6 ergibt sich der nachfolgend angegebene Intensitätsverlauf

$$I_{2xDMD}(g_1, g_2) = \frac{1}{T}\int_0^T \big(I_1(g_1, t) \cdot I_2(g_2, t)\big)dt$$

$$= \frac{1}{T}\int_0^T \{U + (1-U) \cdot i_1(g_1, t)\} \cdot \{U + (1-U) \cdot i_2(g_2, t)\}dt$$

Dabei ist T = 1/f (Einzelbilddauer T) die Zeit, die bei einer Framerate f für die Darstellung eines Frames (Einzelbildes) benötigt wird. Die Funktionen $i_1(g_1, t)$ und $i_2(g_2, t)$ beschreiben in Abhängigkeit eines Eingabe-Grauwertes $g_1$ bzw. $g_2$, zu welchen Zeiten t ein Kippspiegel der Modulatoren 203, 205 Licht weiterleitet (d.h. die Funktion den Wert 1 besitzt) bzw. kein Licht weiterleitet (d.h. die Funktion den Wert 0 besitzt). Die Funktionen $i_1$ und $i_2$ nehmen zeitlich also nur die Werte 0 und 1 an. Daraus ergibt sich, dass es eine Zeit $T_1 \leq T$ gibt, für die beide Modulatoren 203, 205 auf schwarz gestellt sind. Weiterhin gibt es eine Zeit $T_2 \leq T$, für die genau einer der beiden Modulatoren 203, 205 auf schwarz gestellt ist (Funktionswert von $i_1$ oder $i_2$ ist 0), während der andere auf weiß steht ($i_1$ oder $i_2$ ist 1). Schließlich gibt es eine Zeit $T_3 \leq T$, für die beide Modulatoren 203, 205 auf weiß stehen ($i_1$ und $i_2$ ist 1). Es gilt $T_1 + T_2 + T_3 = T$. Aus diesen Überlegungen folgt:

$$I_{2xDMD}(g_1, g_2) = \frac{1}{T}\left\{\int_{T_1} U^2 dt + \int_{T_2} U dt + \int_{T_3} 1 dt\right\}$$

$$= \frac{1}{T}\{T_1(g_1, g_2) \cdot U^2 + T_2(g_1, g_2) \cdot U + T_3(g_1, g_2)\}$$

Dabei sind die Zeiten $T_1$, $T_2$ und $T_3$ Funktionen der Eingabe-Grauwerte $g_1$ und $g_2$.

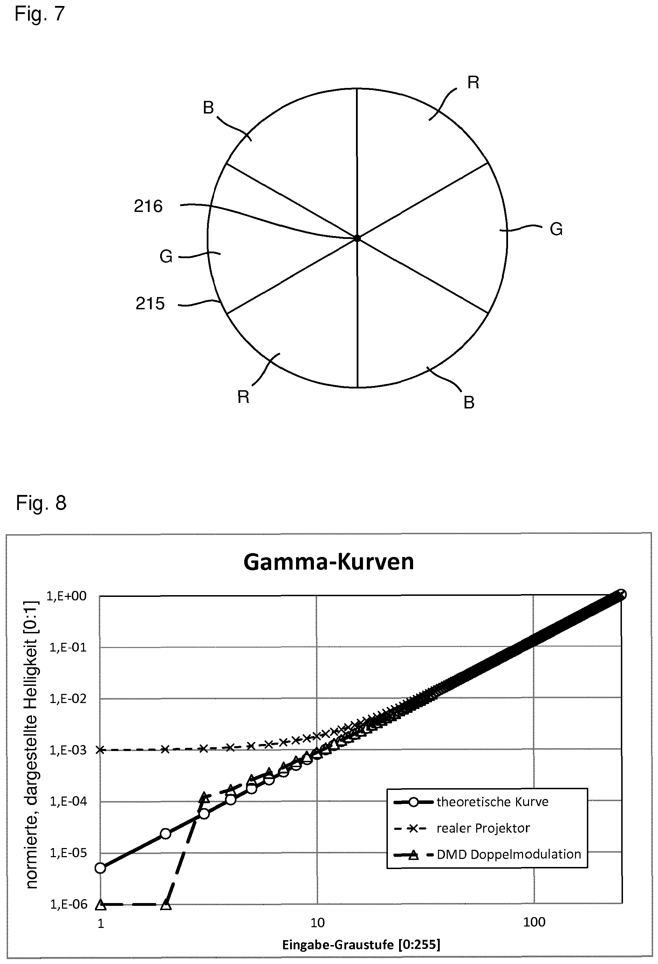

Die resultierenden, projizierten Helligkeiten eines solchen Projektors 201 werden an einem nachfolgenden Beispiel verdeutlicht. Wenn eine farbige Bilderzeugung gewünscht ist, kann ein Farbrad 215 im Strahlengang zwischen der Lichtquelle 202 und dem ersten Modulator 203 angeordnet sein, wie in Fig. 6 gestrichelt dargestellt ist. Die Farben werden dann zeitsequentiell über das Farbrad 215 erzeugt, das mit seiner Drehachse 216 schematisch dargestellt ist. In Fig. 7 ist eine Draufsicht des Farbrads 215 gezeigt, das sechs gleich große Farbsegmente (die sich somit über einen Winkelbereich von 60° erstrecken) aufweist. Die Farbsegmente sind mit den Großbuchstaben R, G und B bezeichnet. Dies soll verdeutlichen, dass das entsprechende Farbsegment nur die rote Farbe (bei R), die grüne Farbe (bei G) und die blaue Farbe (bei B) durchlässt, so dass von dem weißen Licht der Lichtquelle 202 zeitsequentiell rotes, grünes oder blaues Licht auf den Beleuchtungsmodulator 203 fällt. Somit können mittels der beiden Modulatoren 203, 205 zeitlich nacheinander rote, grüne und blaue Teilbilder projiziert werden. Diese werden zeitlich so schnell aufeinanderfolgend erzeugt, dass für einen Betrachter nur die Überlagerung und somit ein Farbbild wahrnehmbar ist. Dies kann beispielsweise bei einer Bildrate bzw. Framerate von f = 60 Hz dadurch erreicht werden, dass das Farbrad 215 mit einer Frequenz von 120 Hz dreht. Dadurch gibt es innerhalb eines Frames (Einzelbildes) vier Rot-Durchläufe, vier Grün-Durchläufe und vier Blau-Durchläufe. Für jeden Farbübergang werden 15° abgezogen, der sogenannte Spoke. Während dieser Zeitdauer wird der Beleuchtungsmodulator 203 dunkel geschaltet, um eine undefinierte Farbprojektion zu verhindern, da gerade eine Farbsegmentgrenze des Farbrades 215 das Beleuchtungslicht kreuzt. Somit verbleiben für eine Farbmodulation pro Farbe (rot, grün und blau) vier Zeit-Segmente mit einer Farbrad-Segmentgröße von 45°. Dies entspricht bei einer Framerate von 60 Hz einer Zeit von

$$T_{RGB} := T_R = T_G = T_B = \frac{4 * 45°}{720°} * \frac{1}{60\,\mathrm{Hz}} = 4167\mu s$$

Die minimale Zeit, die ein Kippspiegel K1, K2 Licht weiterleiten oder nicht-weiterleiten kann (LSB, *Least Significant Bit)* wird wie folgt angenommen

$$t_{LSB} = 2 * 25\mu s$$

Der Faktor 2 ergibt sich daraus, dass in zwei der vier Farbumläufe eines Frames eine Zeitscheibe von 25 $\mu$s zur Darstellung des LSBs verwendet wird. Setzt man diese Zeit ins Verhältnis zur Gesamtdauer einer Farbe ($T_{RGB}$), so ergibt sich eine Helligkeit von 0,012, was einer Graustufe von etwa 34 entspricht (bei $\gamma$ = 2,2).

Mittels eines räumlichen und zeitlichen Ditherings kann dieser Wert um einen Faktor $n_{Dither}$ weiter reduziert werden. Für den Grenzwert, unterhalb dessen alle Graustufen "gedithert" werden müssen, ergibt sich aus

$$I_{Theorie}(g) := \left(\frac{g}{255}\right)^{\gamma}$$

folgender Grauwert $g_{Dither}$

$$g_{Dither} = 255 * \left(\frac{t_{LSB}}{T_{RGB}}\right)^{1/\gamma}$$

Über das Dither-Verfahren lassen sich für die untersten Graustufen (im Beispiel bis Graustufe 34) Helligkeiten in diskreten Abstufungen erzeugen. Die minimale effektive An-Zeit für einen Kippspiegel (gemittelt über 256 Frames/Einzelbilder) beträgt dann

$$t_{min} = t_{LSB}/n_{Dither} = 2 * 25\mu s/256 \approx 2\mu s$$

Dabei wurde für dieses Beispiel eine Dither-Auflösung von 8 Bit gewählt, welche $n_{Dither}$ = 256 ergibt. Um eine definierte Graustufe $g \leq g_{Dither}$ darzustellen, wird ein n-Faches der minimalen An-Zeit $t_{min}$ benötigt, das sich wie folgt errechnet.

$$n(g) = \left[\!\!\left[\left(\frac{g}{255}\right)^{\gamma} \cdot \frac{T_{RGB}}{t_{LSB}}\right]\!\!\right]$$

Dabei rundet der Operator $[\!\![\cdots]\!\!]$ auf die nächste natürliche Zahl (inklusive der 0). In diesem Beispiel entspricht damit der kleinste darstellbare Helligkeitswert $t_{min}/T_{RGB} = 4{,}69 \cdot 10^{-5}$. Die nachfolgende Tabelle 1 zeigt in der Spalte *Helligkeit theoretisch,* dass dies etwa Graustufe 3 eines theoretischen Systems mit Einfachmodulation (wie beim Projektor 101 mit Einfachmodulation) entspricht. Die Spalte *Helligkeit "S.d.*T.*"* betrifft den Projektor 101 mit Einfachmodulation und die Spalte *Helligkeit mit 2xDMD* entspricht dem Projektor 201 mit Doppelmodulation.

Tabelle 1

| Graustufe Eingang | Helligkeit theoretisch | Helligkeit "S.d.T." | Helligkeit mit 2xDMD |
|---|---|---|---|
| [0:255] | [0:1] | [0:1] | [0:1] |
| 0 | 0 | 1,00E-03 | 1,00E-06 |
| 1 | 5,08 E-06 | 1,01E-03 | 1,00E-06 |
| 2 | 2,33E-05 | 1,02E-03 | 1,00E-06 |
| 3 | 5,69E-05 | 1,06E-03 | 1,20E-04 |
| 4 | 1,07E-04 | 1,11E-03 | 1,67E-04 |
| 5 | 1,75E-04 | 1,17E-03 | 2,60E-04 |
| 6 | 2,62E-04 | 1,26E-03 | 3,54E-04 |
| 7 | 3,67E-04 | 1,37E-03 | 4,48E-04 |
| 8 | 4,93E-04 | 1,49E-03 | 5,88E-04 |
| 9 | 6,38E-04 | 1,64E-03 | 7,29E-04 |
| 10 | 8,05E-04 | 1,80E-03 | 8,69E-04 |
| 11 | 9,92E-04 | 1,99E-03 | 1,06E-03 |
| 12 | 1,20E-03 | 2,20E-03 | 1,29E-03 |
| 13 | 1,43E-03 | 2,43E-03 | 1,52E-03 |
| 14 | 1,69E-03 | 2,69E-03 | 1,76E-03 |
| 15 | 1,96E-03 | 2,96E-03 | 2,04E-03 |
| 16 | 2,26E-03 | 3,26E-03 | 2,32E-03 |
| 17 | 2,59E-03 | 3,58E-03 | 2,65E-03 |
| 18 | 2,93E-03 | 3,93E-03 | 3,02E-03 |
| 19 | 3,30E-03 | 4,30E-03 | 3,35E-03 |
| 20 | 3,70E-03 | 4,69E-03 | 3,77E-03 |

Es ist also mit dem Projektor 201 mit Doppelmodulation nicht möglich, die Graustufe 0, 1 und 2 darzustellen.

Wenn das Bild auf dem Bildmodulator 205 nach dem *Phased-Reset-Verfahren* (bei dem die Pixel nacheinander blockweise geschaltet werden, wie z.B. in dem Artikel "10.4: Phased Reset Timing for Improved Digital Micromirror Device (DMD) Brightness"; D. Doherty, G. Hewlett; SID Symposium Digest of Technical Papers, 29: 125-128. doi: 10.1889/1.1833710 im Detail beschrieben ist) adressiert wird und jede der 16 Reset-Zonen gegenüber der vorherigen Reset-Zone um $t_{Reset}$ = 8 µs zeitlich versetzt wird, werden in der Zeit

$$\frac{T_{LSB}}{2} = \frac{t_{LSB}}{2} + 15 * t_{Reset} = 145\mu s$$

die LSBs aller 16 Reset-Zonen dargestellt. Der Faktor 1/2 ergibt sich daraus, dass in einem Frame das LSB auf zwei Zeitabschnitte des Farbrades verteilt ist.

Man kann nur diese Zeit für eine Beleuchtung durch den Beleuchtungsmodulator 203 nutzen, der nach dem Global-Resetverfahren adressiert wird (bei dem alle Pixel gleichzeitig geschaltet werden, wie z.B. im gleichen SID-Artikel wie oben im Detail beschrieben ist). In diesem Beispiel wird die Beleuchtungszeit für das LSB ein wenig größer gewählt.

$$\tau_{LSB} = 2 * 150\mu s = 300\mu s$$

Der Faktor 2 ergibt sich wieder daraus, dass sich das LSB auf zwei der vier RGB-Farbdurchgänge verteilt. Das LSB, mit dem die untersten 34 Graustufen moduliert werden können (über zeitliches Dithering), wird bei Verwendung eines 4x-Farbrades 215 (vier Farbdurchgänge in einem Frame) in zwei der vier Farbdurchgänge verwendet. Für eine Darstellung von Grauwerten, die nur das LSB für eine Darstellung benötigen (über räumliches und zeitliches Dithering bis beispielsweise Graustufe 34), wird ab RGB = (3,3,3) - hier gilt im Beispiel n (g = 3) = 1, während für n (g≤3) = 0 abgerundet ist - Beleuchtungslicht über den Beleuchtungsmodulator für die Zeit

$$\tau = 3 * 300\mu s = 900\mu s$$

auf den Bildmodulator geleitet (drei Farben). Das bedeutet, dass während 900 $\mu$s • 60 Hz = 5,4 % der Zeit eines Frames der Beleuchtungsmodulator 203 Licht auf den Bildmodulator 205 weiterleitet. Um die projizierten Helligkeiten für Eingabe-Grauwerte $3 \leq g \leq g_{Dither}$ zu errechnen, sind die Zeiten $T_1$, $T_2$ und $T_3$ zu betrachten und es ergibt sich:

$$T_1(g) = T_R + T_G + T_B - \tau = 12500\mu s - \tau = 1160\mu s$$

$$T_2(g) = \tau - 3 \cdot n(g) \cdot t_{min}$$

$$T_3(g) = 3 \cdot n(g) \cdot t_{min}$$

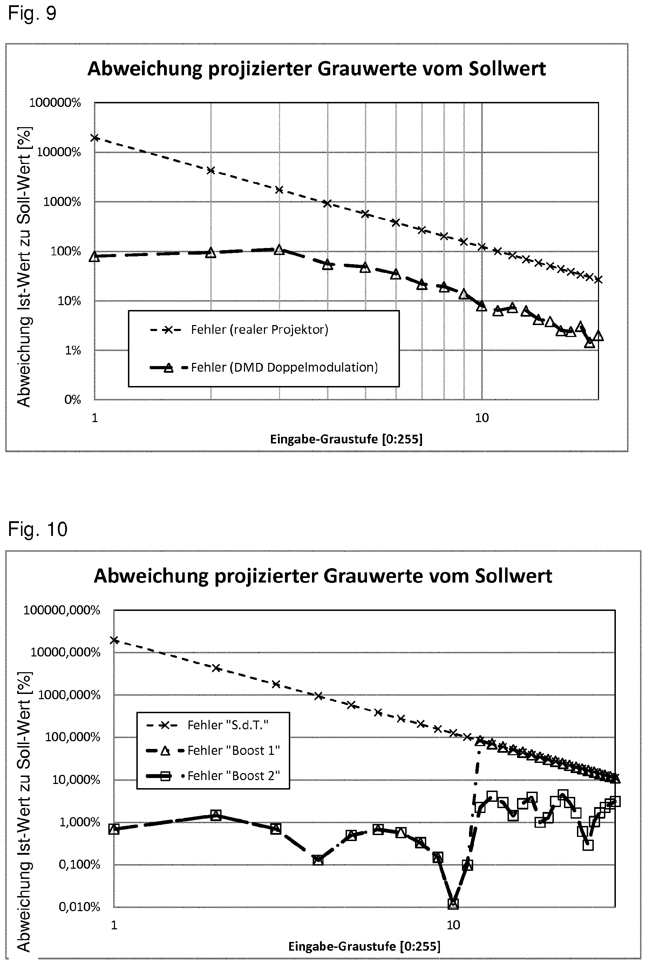

Der Faktor 3 ergibt sich aus den drei Farben rot, grün und blau. Für g < 3 gilt $T_1(g) = T_R + T_G + T_B$ und $T_2(g)$ = $T_3(g)$ = 0. Damit lässt sich unter Verwendung der obigen Formel für $I_{2DMD}(g_1, g_2)$ der Helligkeitsverlauf für die untersten Graustufen beim Projektor 201 mit Kippspiegelmatrizen-Doppelmodulation berechnen. Die Ergebnisse sind zusätzlich zur Tabelle 1 in den nachfolgenden Figuren 8 und 9 dargestellt. Für die dunklen Graustufen ergibt sich nach dieser Lösung eine deutliche Verbesserung gegenüber dem Stand der Technik mit Einfachmodulation (Bilderzeugung mittels eines Projektors mit Einfachmodulation).

In Fig. 8 sind zum Vergleich die theoretische $\gamma$-Kurve (im Beispiel mit $\gamma$ = 2,2) als durchgezogene Linie, die realen Kurve für den Projektor 101 mit Einfachmodulation für einen Kontrast K = 1000:1 als gestrichelte Linie und die reale Kurve für den Projektor 201 mit Doppelmodulation als lang-gestrichelte Linie dargestellt. Entlang der x-Achse ist dabei die Eingabe-Graustufe im Bereich von 1 bis 255 und entlang der y-Achse ist die normierte Helligkeit im Bereich von $1 \cdot 10^{-6}$ bis 1 aufgetragen.

In Fig. 9 ist die prozentuale Abweichung des projizierten Grauwertes für den Projektor 101 mit Einfachmodulation als gestrichelte Linie und für den Projektor 201 mit Doppelmodulation als lang-gestrichelte Linie vom Soll-Wert für die untersten 20 Graustufen dargestellt. Dabei ist entlang der x-Achse die Eingabe-Graustufe im Bereich von 0 bis 20 und entlang der y-Achse die Abweichung des Ist-Werts zum Soll-Wert in Prozent aufgetragen (Betrag vom Ist-Wert minus Soll-Wert durch den Soll-Wert).

Es zeigt sich, dass mit dem Projektor 201 mit Doppelmodulation für niedrige Grauwerte die Abweichung der projizierten Helligkeiten von den Soll-Helligkeiten um mehr als eine Größenordnung geringer wird im Vergleich zum Projektor 101 mit Einfachmodulation. Die Abweichung vom Soll-Wert bleibt jedoch auch beim Projektor 201 mit Doppelmodulation für Graustufen kleiner als 10 über einer Wahrnehmungsschwelle für Helligkeitsabweichungen von 10%.

Ein weiterer Nachteil besteht beim Projektor 201 mit Doppelmodulation darin, dass, wie oben dargelegt, die untersten Graustufen über ein Dithering erzeugt werden müssen (im Beispiel bis Graustufe 34). Das bedeutet, dass die Helligkeit zu einem solchen Grauwert über mehrere Pixel und/oder über mehrere Frames verteilt wird. Befindet sich der Betrachter nahe an der Projektionsfläche (bzw. nehmen die Pixel eine gewisse Winkel-Größe ein), so wird ein Flirren sichtbar, das als störend empfunden wird. Darüber hinaus kann es vorkommen, dass die untersten Graustufen auch nicht mehr über ein Dithering dargestellt werden können. Beim beschriebenen Projektor 201 mit Doppelmodulation sind die Graustufen 0, 1 und 2 identisch gleich dem Untergrund und erst ab Graustufe 3 werden die Helligkeiten moduliert.

## Erfindungsgemäßer Projektor 1

Bei dem erfindungsgemäßen Projektor 1 wird die Ansteuerung der Modulatoren 3 und 5 so umgesetzt, dass ein Dithering für niedrige Graustufenwerte nicht eingesetzt werden muss. Der durch das Dithering bedingte störende Bildeindruck kann deutlich reduziert werden. Ferner können darüber hinaus auch noch die allerniedrigsten Graustufen unterscheidbar dargestellt werden.

Dies wird dadurch erreicht, dass für dunkle Graustufen (Graustufen deren Werte kleiner oder gleich einem Schwellwert und natürlich größer als Null sind) die Beleuchtungs- und Bildsteuerdaten MS, BS in der Art und Weise erzeugt werden, dass der Beleuchtungsmodulator 3 kein Licht zur Verfügung stellt und der Bildmodulator 5 trotzdem eine Helligkeits-Modulation durchführt. Die Modulation mit dem Bildmodulator 5 berücksichtigt dabei, dass eine Beleuchtung nur mit dem nicht zu vermeidenden Restlicht (Untergrundhelligkeit U des Beleuchtungsmodulators 3) erfolgt, so dass der Bildmodulator 5 so angesteuert wird, als ob er einen helleren Grauwert erzeugen soll. Somit werden durch den Bildmodulator 5 alle Helligkeiten moduliert, die geringer sind als die Untergrundhelligkeit des Beleuchtungsmodulators 3. Dabei entspricht die Ansteuerung des Bildmodulators 5 einer Helligkeit bzw. einer Graustufe, die unter Berücksichtigung des gewählten $\gamma$-Wertes um den Kontrastwert des Beleuchtungsmodulators 3 vervielfacht wird. Der Projektor 1 kann in gleicher Weise wie der Projektor 201 mit Doppelmodulation ein Farbrad 15 aufweisen, um mehrfarbige Bilder erzeugen und projizieren zu können.

Man kann auch sagen, dass zur Darstellung der geringen Graustufen ($\leq$ dem Schwellwert) der Beleuchtungsmodulator 3 auf Schwarz gestellt wird, während die Graustufen des Bildmodulators 5 um den Kontrast des Beleuchtungsmodulators erhöht (geboostet) werden. Die Unterscheidung zwischen der normalen Darstellung und geboosteten Pixeln erfolgt auf Pixel-Ebene, wie nachfolgend noch im Detail beschrieben wird. Bei einem Projektor 1 mit Kippspiegel-Doppelmodulation müssen durch die Darstellung der dunklen Graustufen über geboostete (erhöhte) Grauwerte auf dem Bildmodulator 5 diese nicht mehr durch ein Dithering erzeugt werden, so dass alle geboostet dargestellten Helligkeiten nicht flirren und den Betrachter nicht irritieren. Darüber hinaus lassen sich selbst die niedrigsten Grauwerte unterscheidbar darstellen.

Für die nachfolgende Betrachtung wird davon ausgegangen, dass die Zwischenabbildung mittels der Abbildungsoptik 4 vom Beleuchtungsmodulator 3 auf den Bildmodulator 5 keine Bildfehler aufweist, so dass Licht eines jeden Pixels K1 des Beleuchtungsmodulators 3 auf genau das eine zugeordnete Pixel K2 (und nur dieses Pixel) des Bildmodulators 5 gelenkt wird.

Wird der Beleuchtungsmodulator 3 auf Schwarz geschaltet (Graustufe 0, $g_1 = 0$) und der Bildmodulator 5 auf Weiß (Graustufe 255, $g_2 = 255$), so ergibt sich als projizierte Helligkeit ein Wert, der dem Untergrund eines Projektors 101 mit Einzelmodulation entspricht. Im genannten Beispiel mit einem Projektor 101, dessen Bildgeber einen Kontrast von K = 1000:1 und $\gamma$ = 2,2 besitzt, entspricht diese Untergrund-Helligkeit (U = 1/K = 0, 001) etwa der Graustufe 11 eines idealen Projektors (vgl. Tabelle 1). Dies ergibt sich daraus, dass die Abhängigkeit der projizierten (normierten) Helligkeit $I_{theor}$ von einer Graustufe g als

$$I_{theor}(g) := \left(\frac{g}{255}\right)^{\gamma}$$

gegeben ist. Daraus folgt für eine Grenz-Graustufe $g_{Grenz}$ (= Schwellwert):

$$g_{Grenz} = 255 \cdot (U)^{1/\gamma} = 11.03 \approx 11$$

Wenn beide Modulatoren 3, 5 die gleiche Untergrundhelligkeit U aufweisen, ergibt sich für den Helligkeitsverlauf in Abhängigkeit der Eingabe-Grauwerte $g_1$ und $g_2$ folgende Formel

$$I_{Doppel}(g_1, g_2) = I_{SdT}(g_1) * I_{SdT}(g_2) = \left\{U + (1 - U) \cdot \left(\frac{g_1}{255}\right)^{\gamma}\right\} * \left\{U + (1 - U) \cdot \left(\frac{g_2}{255}\right)^{\gamma}\right\}$$

Für $g_1 = 0$ ergibt sich als projizierte Helligkeit nach einer Doppelmodulation

$$I_{Doppel}(g_1 = 0, g_2) = U * \left\{U + (1 - U) \cdot \left(\frac{g_2}{255}\right)^{\gamma}\right\}$$

Gesucht ist nun der Grauwert $g_2$ für den Bildmodulator 5, um eine beliebige Graustufe, die kleiner ist als die Grenz-Graustufe (g = $g_{Grenz}$), mit Hilfe der Doppelmodulation darzustellen.

$$I_{Doppel}(g_1 = 0, g_2) = I_{theor}(g)$$

Diese Gleichung lässt sich nach $g_2$ auflösen.

$$g_2 = \left\lVert 255 \cdot \left[ \left( \frac{\left(\frac{g}{255}\right)^{\gamma}}{U} - U \right) \middle/ (1 - U) \right]^{1/\gamma} \right\rVert$$

Dabei wird $g_2$ auf eine natürliche Zahl zwischen 0 und 255 gerundet, wie der Operator $\llbracket \dots \rrbracket$ anzeigt.

Um beispielsweise die Graustufe g = 3 darzustellen, wird für den Beleuchtungsmodulator 3 $g_1$ = 0 eingesetzt und für den Bildmodulator 5 $g_2$ = 69 eingestellt. Der Bildmodulator 5 verwendet also einen überhöhten (geboosteten) Wert gegenüber dem eigentlich gewünschten Grauwert (hier Graustufe g = 3).

Da die Beleuchtungs- und Bildsteuerdaten MS, BS als pulsweitenmodulierte Steuerdaten erzeugt werden, kann man sie auch anhand ihres Tastgrades (oder Tastverhältnisses) charakterisieren. Ohne das erfindungsgemäße Boosten hätten die Bildsteuerdaten BS einen Tastgradbereich von 0 bis 255, wobei bei Null (=minimaler Tastgrad) die Kippspiegel K2 während der gesamten Einzelbilddauer T in der zweiten Kippstellung stehen und bei 255 (= maximaler Tastgrad) während der gesamten Einzelbilddauer T in der ersten Kippstellung stehen. Bei Tastgradwerten zwischen 0 und 255 steht die Kippspiegel K2 während einer ersten Zeitdauer Δt1 in der ersten Kippstellung und während einer zweiten Zeitdauer Δt2 in der zweiten Kippstellung, wobei Δt1 + Δt2 = T. Somit wird die zweite Zeitdauer Δt2 umso länger je größer der Tastgradwert ist. In der Regel wird der Kippspiegel K2 bei Tastgradwerten zwischen 0 und 255 mehrmals zwischen seinen beiden Kippstellungen hin und her geschaltet, so dass sich die beiden Zeitdauern Δt1 und Δt2 aus zeitlichen Unterabschnitten zusammensetzen.

Durch das Boosten wird für die Bildsteuerdaten BS ein erster Tastgradbereich für Grauwerte größer als dem vorbestimmten Schwellwert und ein zweiter Tastgradbereich für Grauwerte, die nicht größer als der vorbestimmte Schwellwert sind, bereitgestellt. Der erste Tastgradbereich weist für Werte größer als dem vorbestimmten Schwellwert, der z.B. dem Grauwert 11 entspricht, die herkömmlichen Werte auf. Damit wäre die untere Grenze des ersten Tastgradbereiches beim Grauwert 12 und der Tastgradwert für diesen Grauwert ist 12. Der erste Tastgradbereich weist somit Werte von 12 bis 255 auf.

Der zweite Tastgradbereich hat somit seine obere Grenze beim Grauwert 11, wobei aber der Tastgradwert für den Grauwert 11 z.B. 254 beträgt. Die untere Grenze des zweiten Tastgradbereiches beträgt bei dem hier beschriebenen Beispiel 21. Der zweite Tastgradbereich weist somit Werte von 21 bis 254 auf.

Aufgrund des Boostens ist zumindest der Tastgradwert bei der oberen Grenze des zweiten Tastgradbereiches (= geboosteter Tastgradbereich) größer als der Tastgradwert an der unteren Grenze des ersten Tastgradbereiches (= ungeboosteter Tastgradbereich). Man kann auch sagen, dass sich die beiden Tastgradbereiche überlappen.

Eine Zusammenstellung der Grauwerte der beiden Modulatoren 3, 5 zur Darstellung einer gegebenen Graustufe g ist in der nachfolgenden Tabelle 2 angegeben. In der linken Spalte sind die mittels des Projektors 1 darzustellende Grauwerte g von 1-15 aus dem maximal möglichen Bereich von 0 - 255 angegeben. In der mittleren Spalte ist der Graustufenwert für den Beleuchtungsmodulator 3 und in der rechten Spalte der Graustufenwert für den Bildmodulator 5 angegeben.

Tabelle 2

| darzustellende Graustufe g [0:255] | Graustufenwert g1 [0:255] | Graustufenwert g2 [0:255] |
|---|---|---|
| 1 | 0 | 21 |
| 2 | 0 | 45 |
| 3 | 0 | 69 |
| 4 | 0 | 92 |
| 5 | 0 | 115 |
| 6 | 0 | 138 |
| 7 | 0 | 162 |
| 8 | 0 | 185 |
| 9 | 0 | 208 |
| 10 | 0 | 231 |
| 11 | 0 | 254 |

(fortgesetzt)

| darzustellende Graustufe g [0:255] | Graustufenwert g1 [0:255] | Graustufenwert g2 [0:255] |
|---|---|---|
| 12 | 255 | 12 |
| 13 | 255 | 13 |
| 14 | 255 | 14 |
| 15 | 255 | 15 |

Daraus wird klar ersichtlich, dass im geboosteten zweiten Tastgradbereich der Beleuchtungsmodulator 3 auf schwarz geschaltet wird (Wert 0) und der Bildmodulator 5 Tastgradwerte (21- 254) aufweist, die größer sind als entsprechende Tastgradwerte für den nicht geboosten Fall (1 -11), die z.B. beim Bildmodulator 205 eingestellt werden würden. Ab Werten über dem Schwellwert g = 11 wird der Beleuchtungsmodulator 3 während der gesamten Einzelbilddauer T auf weiß oder maximale Beleuchtungsintensität geschaltet (Wert 255) und der Bildmodulator 5 wird mit den entsprechenden Grauwerten $g_2$ (12, 13, 14, etc.) angesteuert. Bei der hier beschriebenen Ausführungsform liegt sogar der Tastgradwert (= 21) der unteren Grenze des zweiten Tastgradbereiches über dem Tastgradwert (= 12) der unteren Grenze des ersten Tastgradbereiches. Somit liegt der zweite Tastgradbereich vollständig innerhalb des ersten Tastgradbereiches.

Des Weiteren zeigt sich, dass lediglich für den darzustellenden Graustufe g = 1 mit $g_2 = 21 \leq 34$ ein Wert gedithert werden muss. Somit werden der dadurch hervorgerufenen Irritationen fast vollständig vermieden.

Diese Art der Erzeugung der Beleuchtungs- und Bildsteuerdaten MS, BS wird nachfolgend auch als Boost 1 bezeichnet.

Bei der bisherigen Beschreibung für die geboosteten Pixel wurde stets der Beleuchtungsmodulator 3 auf schwarz geschaltet, während die Helligkeitsmodulation des Untergrundlichtes des Beleuchtungsmodulators 3 durch den Bildmodulator 5 erfolgt. Selbstverständlich können die beiden Modulatoren 3, 5 zum Boosten umgekehrt angesteuert werden, so dass für ein geboostetes Pixel der zweite Modulator 5 auf schwarz gestellt ist, während die Helligkeitsmodulation über den ersten Modulator 3 erfolgt.

Um die mittels des erfindungsgemäßen Projektors 1 erreichten Verbesserungen leicht nachvollziehbar darzustellen, werden zunächst die tatsächlich projizierten Helligkeiten für verschiedene Projektoren zusammengestellt. Für einen theoretischen (normierten) Helligkeitsverlauf in Abhängigkeit einer Graustufe g gilt folgende bereits angegebene Formel.

$$I_{theor}(g) = \left(\frac{g}{255}\right)^{\gamma}$$

Berücksichtigt man die Untergrundhelligkeit in einem realen System nach dem Stand der Technik (Projektor 101 mit Einfachmodulation), so gilt für den (normierten) Helligkeitsverlauf (siehe Tabelle 1, Spalte *Helligkeit "St.d.T."*), folgendes:

$$I_{SaT}(g) := U + (1 - U) \cdot \left(\frac{g}{255}\right)^{\gamma}$$

Für die oben vorgestellte erste Lösung (Boost 1) ergibt sich aufgrund der Doppelmodulation

$$I_{Boost\,1}(g) = \begin{cases} U^2 & \text{für } g = 0 \to (g_1 = 0, g_2 = 0) \\ U \cdot \left\{ U + (1 - U) \cdot \left(\frac{g_2}{255}\right)^{\gamma} \right\} & \text{für } 0 < g \leq g_{Grenz} \to \left( g_1 = 0, g_2 = 255 \cdot \left[ \frac{\left(\frac{g}{255}\right)^{\gamma}}{U} - U \over 1 - U \right]^{\frac{1}{\gamma}} \right) \\ U + (1 - U) \cdot \left(\frac{g_2}{255}\right)^{\gamma} & \text{für } g > g_{Grenz} \to (g_1 = 255, g_2 = g) \end{cases}$$

In Tabelle 3 ist für die untersten 30 Graustufen die resultierende, projizierende Helligkeit nach diesem Verfahren "Boost 1" zusammengestellt.

Tabelle 3:

| Graustufe Eingang [0:255] | Helligkeit theoretisch [0:1] | Helligkeit "S.d.T." [0:1] | Fehler "S.d.T." [%] | Graustufen $g_1$ [0:255] | "Boost 1" $g_2$ [0:255] | Helligkeit "Boost 1" [0:1] | Fehler "Boost 1" [%] |
|---|---|---|---|---|---|---|---|
| 0 | 0 | 1,00E-03 | | 0 | 0 | 1,00E-06 | |
| 1 | 5,08E-06 | 1,01E-03 | 19696% | 0 | 21 | 5,11E-06 | 0,7% |
| 2 | 2,33E-05 | 1,02E-03 | 4287% | 0 | 45 | 2,30E-05 | 1,4% |
| 3 | 5,69E-05 | 1,06E-03 | 1757% | 0 | 69 | 5,73E-05 | 0,7% |
| 4 | 1,07E-04 | 1,11E-03 | 933% | 0 | 92 | 1,07E-04 | 0,1% |
| 5 | 1,75E-04 | 1,17E-03 | 571% | 0 | 115 | 1,74E-04 | 0,5% |
| 6 | 2,62E-04 | 1,26E-03 | 382% | 0 | 138 | 2,60E-04 | 0,7% |
| 7 | 3,67E-04 | 1,37E-03 | 272% | 0 | 162 | 3,69E-04 | 0,6% |
| 8 | 4,93E-04 | 1,49E-03 | 203% | 0 | 185 | 4,94E-04 | 0,3% |
| 9 | 6,38E-04 | 1,64E-03 | 157% | 0 | 208 | 6,39E-04 | 0,2% |
| 10 | 8,05E-04 | 1,80E-03 | 124% | 0 | 231 | 8,05E-04 | 0,0% |
| 11 | 9,92E-04 | 1,99E-03 | 101% | 0 | 254 | 9,91E-04 | 0,1% |
| 12 | 1,20E-03 | 2,20E-03 | 83% | 255 | 12 | 2,20E-03 | 83% |
| 13 | 1,43E-03 | 2,43E-03 | 70% | 255 | 13 | 2,43E-03 | 70% |
| 14 | 1,69E-03 | 2,69E-03 | 59% | 255 | 14 | 2,69E-03 | 59% |
| 15 | 1,96E-03 | 2,96E-03 | 51% | 255 | 15 | 2,96E-03 | 51% |
| 16 | 2,26E-03 | 3,26E-03 | 44% | 255 | 16 | 3,26E-03 | 44% |
| 17 | 2,59E-03 | 3,58E-03 | 39% | 255 | 17 | 3,58E-03 | 39% |
| 18 | 2,93E-03 | 3,93E-03 | 34% | 255 | 18 | 3,93E-03 | 34% |
| 19 | 3,30E-03 | 4,30E-03 | 30% | 255 | 19 | 4,30E-03 | 30% |
| 20 | 3,70E-03 | 4,69E-03 | 27% | 255 | 20 | 4,69E-03 | 27% |
| 21 | 4,12E-03 | 5,11E-03 | 24% | 255 | 21 | 5,11E-03 | 24% |
| 22 | 4,56E-03 | 5,56E-03 | 22% | 255 | 22 | 5,56E-03 | 22% |
| 23 | 5,03E-03 | 6,02E-03 | 20% | 255 | 23 | 6,02E-03 | 20% |
| 24 | 5,52E-03 | 6,52E-03 | 18% | 255 | 24 | 6,52E-03 | 18% |
| 25 | 6,04E-03 | 7,03E-03 | 16% | 255 | 25 | 7,03E-03 | 16% |
| 26 | 6,58E-03 | 7,58E-03 | 15% | 255 | 26 | 7,58E-03 | 15% |
| 27 | 7,16E-03 | 8,15E-03 | 14% | 255 | 27 | 8,15E-03 | 14% |
| 28 | 7,75E-03 | 8,74E-03 | 13% | 255 | 28 | 8,74E-03 | 13% |
| 29 | 8,37E-03 | 9,36E-03 | 12% | 255 | 29 | 9,36E-03 | 12% |
| 30 | 9,02E-03 | 1,00E-02 | 11% | 255 | 30 | 1,00E-02 | 11% |

Es zeigt sich, dass für Graustufen, die kleiner oder gleich der Grenz-Graustufe $g_{Grenz}$ (= 11) sind, die theoretischen Helligkeiten bis auf etwa 1% erreicht werden. Für Graustufen, die geringfügig heller sind, gibt es jedoch erhebliche Abweichungen (bis zu ca. 80% für die erste Graustufe oberhalb der Grenz-Graustufe).

Um die beschriebenen Abweichungen vom Soll-Wert für Graustufen oberhalb der Graustufen-Grenze ($g > g_{Grenz}$) weiter zu verkleinern, können in einer Weiterbildung der Boost 1 Variante die Grauwerte $g_2$ des Bildmodulators 5 derart gewählt werden, dass sie für einen realen Projektor 1 mit einer realen Untergrundhelligkeit U (aufgrund der Wahl von $g_1 = 255$) die theoretischen Helligkeiten erzielen (dies wird nachfolgend auch als "Boost 2" bezeichnet). Gesucht wird also ein $g_2'$, für das die folgende Forderung gilt:

$$I_{Doppel}(g_1 = 1, g_2') = I_{theor}(g)$$

für alle $g_{Grenz} < g \leq 255$

Dies wird erfüllt für

$$g_2' = \left[\!\left[ 255 \cdot \left( \frac{\left(\frac{g}{255}\right)^\gamma - U}{1 - U} \right)^{\frac{1}{\gamma}} \right]\!\right]$$

Dieser Wert wird auf eine natürliche Zahl zwischen 0 und 255 gerundet, wie der Operator $[\![...]\!]$ anzeigt. Für den hier betrachteten Fall mit einem Kontrast von K = 1000:1 und $\gamma$ = 2,2 sind die sich ergebenden Grauwerte $g_2$' in Tabelle 3 eingetragen.

Für die Variante "Boost 2" ergeben sich folgende Helligkeiten:

$$l_{Boost\,2}(g) = \begin{cases} U^2 & \text{für } g = 0 \ \rightarrow (g_1 = 0, g_2' = 0) \\[2em] U \cdot \left\{ U + (1-U) \cdot \left(\frac{g_2'}{255}\right)^\gamma \right\} & \text{für } 0 < g \leq g_{Grenz} \ \rightarrow \left( g_1 = 0, g_2' = 255 \cdot \left[ \frac{\left(\frac{g}{255}\right)^\gamma - U}{U} \right]^{\frac{1}{\gamma}} \right) \\[2em] U + (1-U) \cdot \left(\frac{g_2'}{255}\right)^\gamma & \text{für } g > g_{Grenz} \ \rightarrow \left( g_1 = 255, g_2' = 255 \cdot \left[ \frac{\left(\frac{g}{255}\right)^\gamma - U}{1 - U} \right]^{\frac{1}{\gamma}} \right) \end{cases}$$

Diese Werte sind in der nachfolgenden Tabelle 4 eingetragen.

Tabelle 4:

| Graustufe Eingang [0:255] | Helligkeit theoretisch [0:1] | Helligkeit "S.d.T." [0:1] | Fehler "S.d.T." [%] | Graustufen "Boost 2" | | Helligkeit "Boost 2" [0:1] | Fehler "Boost 2" [%] |
|---|---|---|---|---|---|---|---|
| | | | | $g_1$ [0: 255] | $g_2'$ [0: 255] | | |
| 0 | 0 | 1,00E-03 | | 0 | 0 | 1,00E-06 | |
| 1 | 5,08E-06 | 1,01E-03 | 19696% | 0 | 21 | 5,11E-06 | 0,7% |
| 2 | 2,33E-05 | 1,02E-03 | 4287% | 0 | 45 | 2,30E-05 | 1,4% |
| 3 | 5,69E-05 | 1,06E-03 | 1757% | 0 | 69 | 5,73E-05 | 0,7% |
| 4 | 1,07E-04 | 1,11E-03 | 933% | 0 | 92 | 1,07E-04 | 0,1% |
| 5 | 1,75E-04 | 1,17E-03 | 571% | 0 | 115 | 1,74E-04 | 0,5% |
| 6 | 2,62E-04 | 1,26E-03 | 382% | 0 | 138 | 2,60E-04 | 0,7% |
| 7 | 3,67E-04 | 1,37E-03 | 272% | 0 | 162 | 3,69E-04 | 0,6% |
| 8 | 4,93E-04 | 1,49E-03 | 203% | 0 | 185 | 4,94E-04 | 0,3% |
| 9 | 6,38E-04 | 1,64E-03 | 157% | 0 | 208 | 6,39E-04 | 0,2% |
| 10 | 8,05E-04 | 1,80E-03 | 124% | 0 | 231 | 8,05E-04 | 0,0% |
| 11 | 9,92E-04 | 1,99E-03 | 101% | 0 | 254 | 9,91E-04 | 0,1% |
| 12 | 1,20E-03 | 2,20E-03 | 83% | 255 | 5 | 1,17E-03 | 2,2% |
| 13 | 1,43E-03 | 2,43E-03 | 70% | 255 | 8 | 1,49E-03 | 4,1% |
| 14 | 1,69E-03 | 2,69E-03 | 59% | 255 | 9 | 1,64E-03 | 2,9% |
| 15 | 1,96E-03 | 2,96E-03 | 51% | 255 | 11 | 1,99E-03 | 1,4% |
| 16 | 2,26E-03 | 3,26E-03 | 44% | 255 | 12 | 2,20E-03 | 2,8% |
| 17 | 2,59E-03 | 3,58E-03 | 39% | 255 | 14 | 2,69E-03 | 3,8% |
| 18 | 2,93E-03 | 3,93E-03 | 34% | 255 | 15 | 2,96E-03 | 1,0% |
| 19 | 3,30E-03 | 4,30E-03 | 30% | 255 | 16 | 3,26E-03 | 1,3% |
| 20 | 3,70E-03 | 4,69E-03 | 27% | 255 | 17 | 3,58E-03 | 3,1% |
| 21 | 4,12E-03 | 5,11E-03 | 24% | 255 | 19 | 4,30E-03 | 4,5% |
| 22 | 4,56E-03 | 5,56E-03 | 22% | 255 | 20 | 4,69E-03 | 2,9% |

(fortgesetzt)

| Graustufe Eingang | Helligkeit theoretisch | Helligkeit "S.d.T." | Fehler "S.d.T." | Graustufen "Boost 2" | | Helligkeit "Boost 2" | Fehler "Boost 2" |
|---|---|---|---|---|---|---|---|
| | | | | $g_1$ [0: 255] | $g_2$' [0: 255] | | |
| [0:255] | [0:1] | [0:1] | [%] | | | [0:1] | [%] |
| 23 | 5,03E-03 | 6,02E-03 | 20% | 255 | 21 | 5,11E-03 | 1,7% |
| 24 | 5,52E-03 | 6,52E-03 | 18% | 255 | 22 | 5,56E-03 | 0,6% |
| 25 | 6,04E-03 | 7,03E-03 | 16% | 255 | 23 | 6,02E-03 | 0,3% |
| 26 | 6,58E-03 | 7,58E-03 | 15% | 255 | 24 | 6,52E-03 | 1,0% |
| 27 | 7,16E-03 | 8,15E-03 | 14% | 255 | 25 | 7,03E-03 | 1,7% |
| 28 | 7,75E-03 | 8,74E-03 | 13% | 255 | 26 | 7,58E-03 | 2,2% |
| 29 | 8,37E-03 | 9,36E-03 | 12% | 255 | 27 | 8,15E-03 | 2,7% |
| 30 | 9,02E-03 | 1,00E-02 | 11% | 255 | 28 | 8,74E-03 | 3,1% |

Bei der Variante "Boost 2" läuft der erste Tastgradbereich von 5 bis 255 und läuft der zweite Tastgradbereich von 21 bis 254. Auch bei der Variante "Boost 2" ist der Tastgradwert der oberen Grenze des zweiten Tastgradbereiches größer als der Tastgradwert der unteren Grenze des ersten Tastgradbereiches. Insbesondere liegt der zweite Tastgradbereich vollständig im ersten Tastgradbereich.

Mit der Variante "Boost 2" werden somit die Abweichung der projizierten Helligkeiten gegenüber den theoretischen Werten nicht mehr größer als 5%. Dies wird dadurch erreicht, dass der erste Tastgradbereich (insbesondere für Grauwerte, die nur etwas größer als der Schwellwert sind) entsprechend angepasst wurde. Der zweite Tastgradbereich der Variante "Boost 2" ist identisch zum zweiten Tastgradbereich der Variante "Boost 1".

In den Tabellen 3 und 4 sind die Helligkeiten des erfindungsgemäßen Projektors in Abhängigkeit der darzustellenden Graustufen bis 30 (für $\gamma$ = 2,2) gezeigt. Verglichen werden die Helligkeiten für ein perfektes (theoretisches) System, für den Projektor 101 mit Einfachmodulation nach dem Stand der Technik ("S.d.T."), der nur einen einzigen Bildmodulator 105 aufweist und einen Kontrast von K = 1000:1, sowie für die erfindungsgemäßen Varianten "Boost 1" und "Boost 2". Zusätzlich ist die Abweichung der Lösungen vom Soll-Wert angegeben.

In Fig. 10 sind die prozentualen Abweichungen des projizierten Grauwertes für den Projektor 101 mit Einfachmodulation nach dem Stand der Technik (gestrichelt), dem erfindungsgemäßen Projektor 1 gemäß Variante "Boost 1" (Punkt-Strich-Linie) und dem erfindungsgemäßen Projektor 1 gemäß "Boost 2" (lang-gestrichelt) vom Soll-Wert für die untersten 30 Graustufen gezeigt.

Aus Fig. 10 ist ersichtlich, dass die Varianten "Boost1" und "Boost2" für die geboosteten Grauwerte (= Grauwerte 1 bis 11) identische Ergebnisse liefern, was natürlich daraus resultiert, dass der zweite Tastgradbereich für beide Varianten identisch ist. Für Grauwerte größer als dem Schwellwert (als Grauwerte 12 und größer) liefert die Variante "Boost2" bessere Ergebnisse, die mit größer werdendem Grauwert abnehmen. Diese Verbesserung wird dadurch erreicht, dass ab dem Eingangs-Grauwert 12 das Restlicht, das nicht zu vermeiden ist, mit berücksichtigt wird. Dies führt zu einer Ansteuerung der zweiten Pixel mit einer geringeren Helligkeit als die Eingangshelligkeit (bei der Eingangshelligkeit 12 wird das zweite Pixel z. B. mit dem Helligkeitswert 6 angesteuert; Tabelle 3). Im Ergebnis führt dies zu der beschriebenen Verbesserung.

In einer weiteren Weiterbildung der Variante "Boost1", die als "Boost 3" bezeichnet wird, kann wie folgt vorgegangen werden. Dabei wird die Tatsache berücksichtigt, dass die Kippspiegelmatrizen eine feine Abstimmung der synchronen Schaltung der Kippspiegel K1, K2 erlauben. Ferner werden die Grauwerte bzw. Helligkeitswerte für jede der drei Grundfarben rot, grün und blau angegeben, was aus der Verwendung von $T_{RGB} := T_R = T_G = T_B$ ersichtlich ist.

Da die beiden Modulatoren 3, 5 mit Pulsweitenmodulation angesteuert werden, ist für die Berechnung der projizierten Helligkeiten folgende Formel anzuwenden:

$$I_{2xDMD}(g_1, g_2^*) = \frac{T_1(g_1, g_2^*) \cdot U^2 + T_2(g_1, g_2^*) \cdot U + T_3(g_1, g_2^*)}{T}$$

Dabei gibt es diskrete Helligkeitsschritte, die über eine Pulsweitenmodulation dargestellt werden können. Für die nachfolgenden Betrachtungen wird angenommen, dass $t_{min}$ die minimale effektive An-Zeit eines Kippspiegels K1, K2 ist (= Zeitdauer, zu der der Kippspiegel in seiner ersten Kippstellung steht) und dass alle Helligkeiten über Vielfache n dieser Zeit gegeben sind.

Die Bestimmung der dargestellten Grauwerte wird wie folgt durchgeführt:

Der Grauwert 0 wird dadurch dargestellt, dass beide DMDs auf Schwarz gestellt sind, d.h. $g_1 = g_2^* = 0$ bzw. $n_1 = n_2 = 0$.

Für die geboosteten Grauwerte mit $0 < g \leq g_{Grenz}$ wird einer der Modulatoren 3, 5 auf Schwarz gesetzt (z.B. $g_1 = 0$ bzw. $n_1 = 0$), während der andere Modulator einen Grauwert $g_2^*$ darstellt (bzw. ein Vielfaches $n_2$ der minimalen effektiven An-Zeit $3 \cdot t_{min}$ für alle drei Farben), um der theoretischen Helligkeit zu genügen. Es ergibt sich also die Forderung:

$$I_{theor}(g) = I_{2xDMD}(g_1 = 0, g_2^*)$$

Da einer der Modulatoren 3, 5 stets auf Schwarz gestellt ist, ergibt sich hier $T_3 = 0$. Für die Zeit $T_2$, in der nur einer der Modulatoren 3, 5 auf Weiß steht, gilt:

$$T_2 = 3 \cdot n_2 \cdot t_{min}$$

Somit folgt für die Zeit, in der beide Modulatoren 3, 5 auf Schwarz gestellt sind:

$$T_1 = 3 \cdot T_{RGB} - T_2 = 3 \cdot T_{RGB} - 3 \cdot n_2 \cdot t_{min}$$

Aus $I_{theor}(g)$ folgt somit:

$$\left(\frac{g}{255}\right)^\gamma = \frac{1}{T}\left\{T_1 \cdot U^2 + T_2 \cdot U + T_3\right\} = \frac{3 \cdot n_2 \cdot t_{min} \cdot U \cdot (1 - U)}{3 \cdot T_{RGB}} + U^2$$

Daraus folgt:

$$n_2(0 < g \leq g_{Grenz}) = \left\lVert \frac{T_{RGB} \cdot \left(\left(\frac{g}{255}\right)^\gamma - U^2\right)}{t_{min} \cdot U \cdot (1 - U)} \right\rVert$$

Dies entspricht einem Eingabe-Grauwert $g_2^*$ für den zweiten Modulator 3, 5 von:

$$g_2^*(0 < g \leq g_{Grenz}) = \left\lVert 255 \cdot \left(\frac{n_2(g) \cdot t_{min}}{T_{RGB}}\right)^{1/\gamma} \right\rVert$$

Für Grauwerte, die nicht geboostet aber noch gedithert werden ($g_{Grenz} < 9 \leq g_{Dither}$) und somit innerhalb einer minimalen Beleuchtungszeit $\tau$ (pro Farbe) des ersten DMDs beleuchtet werden, ergibt sich eine analoge Forderung zu $I_{theor}(g) = I_{2xDMD}(g_1 = 0, g_2^*),$ nämlich

$$I_{theor}(g) = I_{2xDMD}(g_1 = 1, g_2^*)$$

Hierbei soll der Grauwert $g_1 = 1$ des ersten Modulators 3 die Beleuchtungszeit $\tau$ bereitstellen. Es ergibt sich:

$$T_1 = 3 \cdot T_{RGB} - 3 \cdot \tau$$

$$T_2 = 3 \cdot \tau - 3 \cdot n_2 \cdot t_{min}$$

$$T_3 = 3 \cdot n_2 \cdot t_{min}$$

Daraus folgt:

$$\left(\frac{g}{255}\right)^\gamma = \frac{1}{T}\left\{T_1 \cdot U^2 + T_2 \cdot U + T_3\right\} = \frac{(T_{RGB} - \tau) \cdot U^2 + (\tau - n_2 \cdot t_{min}) \cdot U + n_2 \cdot t_{min}}{T_{RGB}}$$

Somit ergibt sich:

$$n_2(g_{Grenz} < g \leq g_{Dither}) = \left[\!\!\left[\frac{T_{RGB} \cdot \left(\frac{g}{255}\right)^\gamma - (T_{RGB} - \tau) \cdot U^2 - \tau \cdot U}{t_{min} \cdot (1 - U)}\right]\!\!\right]$$

Die resultierenden Eingabe-Grauwerte für den zweiten Modulator 5 ergeben sich genauso wie oben:

$$g_2^*(g_{Grenz} < g \leq g_{Dither}) = \left[\!\!\left[255 \cdot \left(\frac{n_2(g) \cdot \boldsymbol{t_{min}}}{T_{RGB}}\right)^{1/\gamma}\right]\!\!\right]$$

Für Graustufen *g* > *g*<sub>Dither</sub> folgt man dem bereits beschriebenen Vorgehen für eine Doppelmodulation, bei dem von einem ersten der beiden Modulatoren 3, 5 die benötigten Zeitscheiben zu Verfügung gestellt werden, die für die Modulation mit dem zweiten Modulator 3, 5 benötigt werden, um die gesuchte Graustufe zu erzeugen.

Führt man dies zusammen, so ergibt sich:

$$I_{Boost3}(g)$$

$$= \begin{cases} U^2 & \text{für } g = 0 \;\rightarrow (g_1 = g_2^* = 0) \\[2ex] \dfrac{n_2 \cdot t_{min} \cdot U \cdot (1-U)}{T_{RGB}} + U^2 & \text{für } 0 < g \leq g_{Grenz} \;\rightarrow \left( g_1 = 0, n_2 = \left[\!\!\left[\dfrac{T_{RGB} \cdot \left(\left(\frac{g}{255}\right)^\gamma - U^2\right)}{t_{min} \cdot U \cdot (1-U)}\right]\!\!\right]\right) \\[3ex] \dfrac{(T_{RGB} - \tau) \cdot U^2 + (\tau - n_2 \cdot t_{min}) \cdot U + n_2 \cdot t_{min}}{T_{RGB}} & \text{für } g_{Grenz} < g \leq g_{Dither} \;\rightarrow \left( g_1 = 1, n_2 = \left[\!\!\left[\dfrac{T_{RGB} \cdot \left(\frac{g}{255}\right)^\gamma - (T_{RGB} - \tau) \cdot U^2 - \tau \cdot U}{t_{min} \cdot (1-U)}\right]\!\!\right]\right) \\[3ex] \text{Normale DMD} - \text{Doppelmodulation} & \text{für } g_{Dither} < g \leq 255 \end{cases}$$

In der nachfolgenden Tabelle 5 sind die Ergebnisse nach dieser Berechnungsvorschrift zusammengestellt. Es zeigt sich, dass mit dieser Methode die geboosteten Werte noch einmal genauer dargestellt werden können.

Tabelle 5

| $g_1$ [0:255] | $g_2^*$ [0:255] | $n_2$ | $T_1$ [μs] | $T_2$ [μs] | $T_3$ [μs] | [0:1] | [%] |
|---|---|---|---|---|---|---|---|
| 0 | 0 | 0 | 0 | 0 | 0 | 1,00E-06 | |
| 0 | 21 | 87 | 12449 | 51 | 0 | 5,07E-06 | 0,059% |
| 0 | 45 | 477 | 12221 | 279 | 0 | 2,33E-05 | 0,039% |
| 0 | 69 | 1194 | 11800 | 700 | 0 | 5,69E-05 | 0,016% |
| 0 | 92 | 2268 | 11171 | 1329 | 0 | 1,07E-04 | 0,018% |
| 0 | 115 | 3718 | 10321 | 2179 | 0 | 1,75E-04 | 0,010% |
| 0 | 138 | 5564 | 9240 | 3260 | 0 | 2,62E-04 | 0,003% |
| 0 | 162 | 7819 | 7919 | 4581 | 0 | 3,67E-04 | 0,003% |
| 0 | 185 | 10496 | 6350 | 6150 | 0 | 4,93E-04 | 0,001% |
| 0 | 208 | 13607 | 4527 | 7973 | 0 | 6,38E-04 | 0,001% |
| 0 | 231 | 17162 | 2444 | 10056 | 0 | 8,05E-04 | 0,001% |
| 0 | 254 | 21170 | 96 | 12404 | 0 | 9,92E-04 | 0,002% |
| 1 | 12 | 24 | 11600 | 885,9 | 14,1 | 1,20E-03 | 0,411% |

(fortgesetzt)

| $g_1$ [0:255] | $g_2$* [0:255] | $n_2$ | $T_1$ [µs] | $T_2$ [µs] | $T_3$ [µs] | [0:1] | [%] |
|---|---|---|---|---|---|---|---|
| 1 | 13 | 29 | 11600 | 883,0 | 17,0 | 1,43E-03 | 0,153% |
| 1 | 14 | 34 | 11600 | 880,1 | 20,0 | 1,67E-03 | 1,294% |
| 1 | 15 | 40 | 11600 | 876,6 | 23,4 | 1,95E-03 | 0,884% |
| 1 | 16 | 47 | 11600 | 872,5 | 27,5 | 2,27E-03 | 0,482% |
| 1 | 17 | 54 | 11600 | 868,5 | 31,6 | 2,60E-03 | 0,612% |
| 1 | 18 | 61 | 11600 | 864,3 | 35,7 | 2,93E-03 | 0,098% |
| 1 | 19 | 69 | 11600 | 859,6 | 40,4 | 3,30E-03 | 0,041% |
| 1 | 20 | 77 | 11600 | 854,9 | 45,1 | 3,68E-03 | 0,502% |
| 1 | 21 | 86 | 11600 | 849,6 | 50,4 | 4,10E-03 | 0,389% |
| 1 | 22 | 96 | 11600 | 843,8 | 56,3 | 4,57E-03 | 0,190% |
| 1 | 23 | 106 | 11600 | 837,9 | 62,1 | 5,04E-03 | 0,169% |
| 1 | 24 | 116 | 11600 | 832,0 | 68,0 | 5,50E-03 | 0,303% |
| 1 | 25 | 127 | 11600 | 825,6 | 74,4 | 6,02E-03 | 0,339% |
| 1 | 26 | 139 | 11600 | 818,6 | 81,4 | 6,58E-03 | 0,044% |
| 1 | 27 | 151 | 11600 | 811,5 | 88,5 | 7,14E-03 | 0,155% |
| 1 | 28 | 164 | 11600 | 803,9 | 96,1 | 7,75E-03 | 0,022% |
| 1 | 29 | 177 | 11600 | 796,3 | 103,7 | 8,36E-03 | 0,139% |
| 1 | 30 | 191 | 11600 | 788,1 | 111,9 | 9,02E-03 | 0,049% |

Bei den bisherigen Betrachtungen wurde davon ausgegangen, dass die Abbildungsoptik 4 jeden Kippspiegel K1 auf genau einen zugeordneten Kippspiegel K2 (und nur auf diesen) abbildet. Dies ist bei einem realen System jedoch praktisch kaum realisierbar, so dass ein Kippspiegel K2 Licht von dem direkt zugeordneten Kippspiegel K1 (der auch als Hauptbeleuchtungspixel bezeichnet werden kann, da von ihm der Hauptteil des auf den Kippspiegel treffenden Lichtes stammt) sowie Licht von dazu benachbarten Kippspiegeln K1 empfängt.

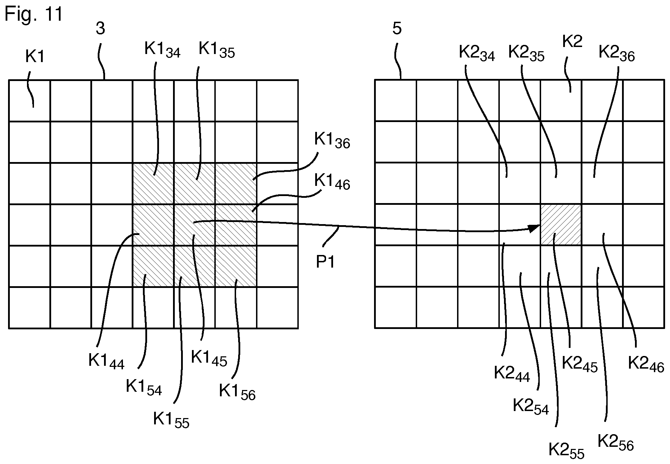

Dies ist schematisch in Fig. 11 dargestellt. Es sei der schraffiert dargestellte Kippspiegel $K2_{45}$ des Bildmodulators 5 betrachtet. Dieser wird hauptsächlich mit dem Licht des direkt zugeordneten Kippspiegels $K1_{45}$ (= Hauptbeleuchtungs-pixel) des Beleuchtungsmodulators 3 beleuchtet, wie durch den Pfeil P1 angedeutet ist. Jedoch trifft auch Licht von den zum Kippspiegel $K1_{45}$ unmittelbar benachbarten Kippspiegeln $K1_{34}$, $K1_{35}$, $K1_{36}$, $K1_{44}$, $K1_{46}$, $K1_{54}$, $K1_{55}$, $K1_{56}$ auf den Kippspiegel $K2_{45}$ des Bildmodulators 5. Somit sind in diesem Fall dem Kippspiegel $K2_{45}$ des Bildmodulators 5 die Kippspiegel $K1_{45}$, $K1_{34}$, $K1_{35}$, $K1_{36}$, $K1_{44}$, $K1_{46}$, $K1_{54}$, $K1_{55}$, $K1_{56}$ des Beleuchtungsmodulators 3 zugeordnet.

Man kann diese Zuordnung auch ausgehend von einem Kippspiegel K1 des Beleuchtungsmodulators 3 formulieren. So trifft Licht vom Kippspiegel $K1_{45}$ hauptsächlich auf den Kippspiegel $K2_{45}$. Zusätzlich trifft Licht vom Kipp-spiegel $K1_{45}$ noch auf die benachbarten Kippspiegel $K2_{34}$, $K2_{35}$, $K2_{36}$, $K2_{44}$, $K2_{46}$, $K2_{54}$, $K2_{55}$ und $K2_{56}$, so dass der Kippspiegel $K1_{45}$ neun Kippspiegeln $K2_{34}$, $K2_{35}$, $K2_{36}$, $K2_{44}$, $K2_{45}$, $K2_{46}$, $K2_{54}$, $K2_{55}$ und $K2_{56}$ zugeordnet ist.

Wenn der Kippspiegel $K2_{45}$ einen Grauwert darstellen soll, der kleiner oder gleich dem Schwellwert $g_{Grenz}$ ist, und der benachbarte Kippspiegel $K2_{44}$ einen Grauwert darstellen soll, der über dem Schwellwert liegt, würde dies dazu führen, dass das Beleuchtungspixel $K1_{45}$ zum Boosten des Bildpixels $K2_{45}$ auf schwarz geschaltet wird und das Be-leuchtungspixel $K1_{44}$ für den Kippspiegel $K2_{44}$ auf weiß geschaltet wird. Damit würde das zu boostende Beleuchtungs-pixel $K2_{45}$ mehr Licht als gewünscht erhalten (z.B. wegen des vom Beleuchtungspixel $K1_{44}$ stammenden Lichtes), was zu einem zu hellen geboosteten Pixel führen würde.

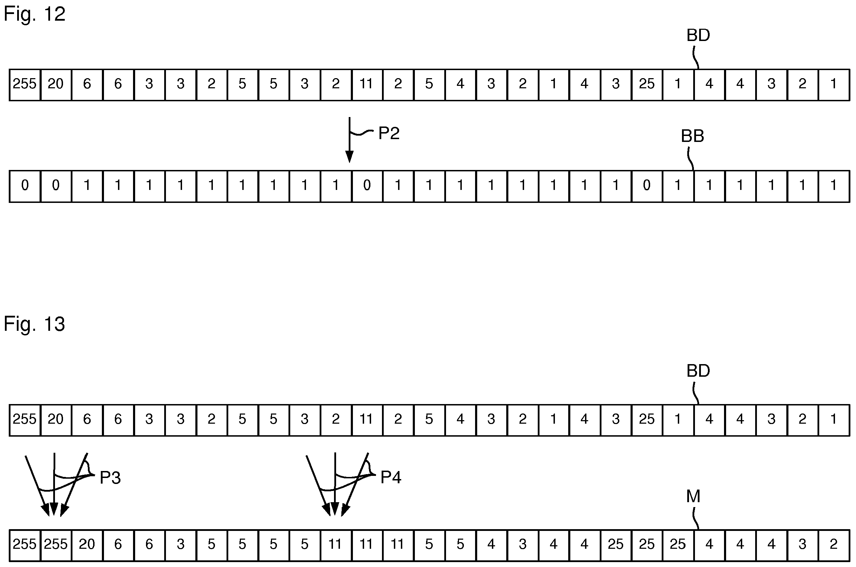

Für die nachfolgende Beschreibung wird zur Vereinfachung der Darstellung von einer darzustellenden Pixelzeile mit 27 Pixeln ausgegangen, wie in Fig. 12 gezeigt ist. Jedes dargestellte Quadrat steht für ein Pixel, wobei in jedem Pixel der darzustellende Grauwert als Zahl angegeben ist (= Bilddaten BD). Als Schwellwert $g_{Grenz}$ wird der Grauwert 10 festgelegt. Basierend auf den gegebenen Bilddaten BD kann für jedes Pixel ermittelt werden (Pfeil P2), ob es boostbar ist (sein Grauwert ist kleiner oder gleich dem Schwellwert 10) oder nicht (sein Grauwert ist größer als der Schwellwert 10). Dadurch werden Boostdaten BB ermittelt, die wiederum für jedes Pixel dargestellt sind. Wenn der Wert des Pixels 1 ist, liegt ein boostbares Pixel vor. Bei einem Wert von 0 ist das Pixel nicht boostbar.

Ferner werden basierend auf den gegebenen Bilddaten BD die Musterdaten M erzeugt. Dazu wird für jedes Pixel der Maximalwert von den Werten der Bilddaten für das Pixel und seinen direkten Nachbarpixeln ermittelt und dieser Maximalwert wird in das entsprechende Pixel der Musterdaten M geschrieben, wie durch die Pfeile P3 und P4 in Fig. 13 für zwei Pixel der Musterdaten M angedeutet ist. Damit wird sichergestellt, dass jedes Pixel des Bildmodulators 5 gleichmäßig oder ausreichend ausgeleuchtet wird, selbst wenn aufgrund der pulsweitenmodulierten Beleuchtungssteuerdaten MS die Beleuchtungspixel während einer Einzelbilddauer zeitweise ausgeschaltet sind.

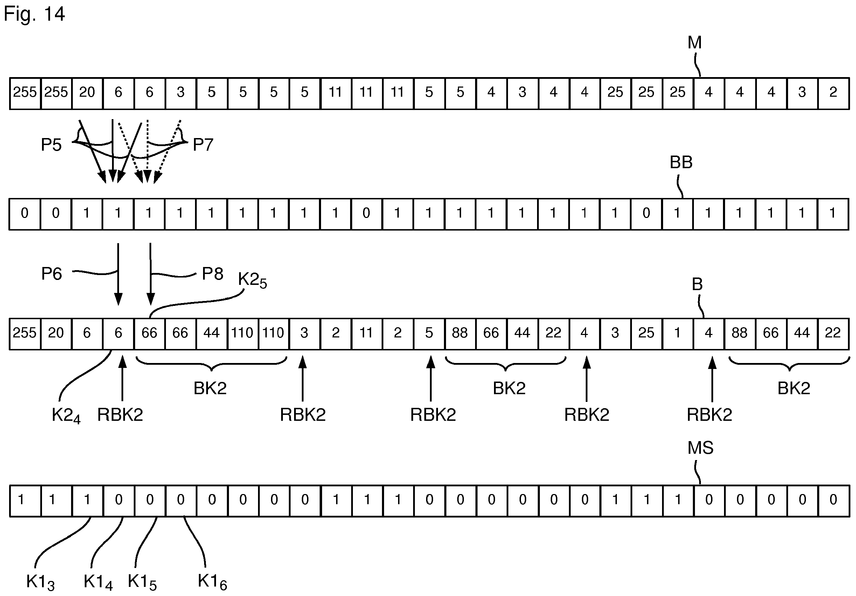

Wie in Fig. 14 gezeigt ist, wird für jedes boostbare Pixel (Pixel mit dem Wert 1 in den Boostdaten BB) ermittelt, ob die Beleuchtungspixelwerte der jeweils zugeordneten drei Pixel der Musterdaten M alle jeweils einen Wert von kleiner oder gleich dem Schwellwert aufweisen. Wenn dies nicht der Fall ist, wird der Grauwert in den Einzelbilddaten B nicht geboostet und somit unverändert übernommen. Dies ist durch die Pfeile P5 und P6 angedeutet. Der linke Pfeil der drei Pfeile P5 zeigt, dass der Wert 20 in den Musterdaten M dem boostbaren Pixel zugeordnet ist, so dass der Grauwert nicht geboostet wird.

Bei dem boostbaren Pixel, dessen zugeordnete Pixelwerte der Musterdaten M durch die Pfeile P7 hervorgehoben sind, sind alle Pixelwerte kleiner oder gleich dem Schwellwert, so dass der entsprechende Grauwert in den Einzelbilddaten B von 6 auf 66 geboostet wird (Peil P8). Es wird hier angenommen, dass der Grauwert eines geboosteten Pixels ausgehend von dem ursprünglichen Grauwert durch Multiplikation mit einem Boostfaktor (der hier 22 beträgt) ermittelt wird.

Die Beleuchtungssteuerdaten MS werden basierend auf den Musterdaten M bei dem hier beschriebenen Ausführungsbeispiel so erzeugt, dass sie für Werte größer als dem Schwellwert 10 gemäß dem Grauwert in den Bilddaten auf ein bzw. Weiß und für Werte kleiner oder gleich dem Schwellwert 10 auf aus bzw. Schwarz gesetzt werden. Somit werden alle geboosteten Pixel BK2 sicher nur mit der nicht zu vermeidenden Untergrundhelligkeit beleuchtet, die entsprechende der geboosteten Werte moduliert wird. So wird z.B. das Pixel $K2_5$ durch Licht von den Pixeln $K1_4$, $K1_5$ und $K1_6$ beleuchtet, die alle auf aus (= 0) gesetzt sind Alle nicht geboosteten Pixel werden hingegen beleuchtet.

Jedoch kann bei einigen der nicht geboosteten Pixeln die Helligkeit der Beleuchtung etwas geringer als bisher ausfallen. Dies betrifft die Randpixel RBK2, deren jeweils zugeordnetes Hauptbeleuchtungspixel auf schwarz geschaltet ist, da dieses Hauptbeleuchtungspixel wegen eines geboosteten Pixels auf schwarz geschaltet ist. Jedoch ist ein Nachbarbeleuchtungspixel nicht auf schwarz geschaltet, so dass von diesem Nachbarbeleuchtungspixel Licht auf das boostbare Randpixel RBK2 fällt. Da das boostbare Randpixel RBK2 jedoch keinen geboosteten Grauwert, sondern den ursprünglichen Grauwert aufweist, kann dadurch ein zu heller Rand sicher vermieden werden. Dies trifft z.B. auf das Pixel $K2_4$ zu, dessen Hauptbeleuchtungspixel $K1_4$ zwar auf aus geschaltet ist. Jedoch liegt eine Restbeleuchtung über das Beleuchtungspixel $K1_3$ vor.

Dieses Vermeiden des zu hellen Randes kann jedoch dazu führen, dass der Rand zu dunkel erscheint, da das Randpixel RBK2 mit der beschriebenen Restbeleuchtung beleuchtet wird.

Dieser unerwünschte Effekt kann durch Ausnutzung der Pulsweitenmodulation zur Ansteuerung der Beleuchtungs- und Bildpixel K1 und K2 verringert werden. Des Weiteren kann die Anzahl der geboosteten Pixel erhöht werden, wie nachfolgend im Detail beschrieben wird.

Es wird von den gleichen Bilddaten BD gemäß Fig. 12 ausgegangen. Aus diesen werden die Boostdaten BB erzeugt, wie bereits in Verbindung mit Fig. 12 beschrieben wurde.

Des Weiteren werden anhand der Bilddaten BD in gleicher Weise wie in Fig. 13 Musterdaten M erzeugt. Diese werden dann in einem weiteren Schritt hinsichtlich der daraus folgenden Pulsweitenmodulation für den Beleuchtungsmodulator 3 ausgewertet.

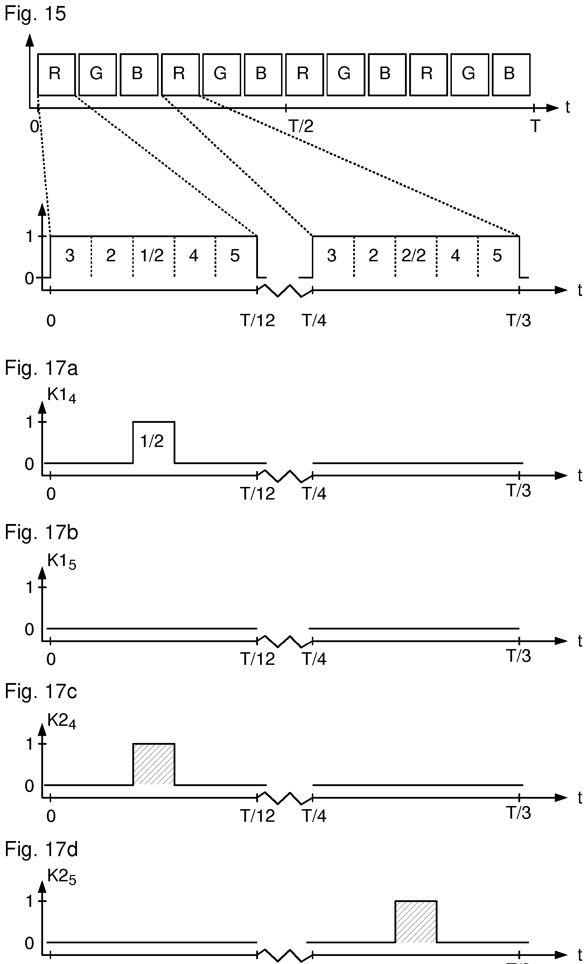

Die Pulsweitenmodulation für den Beleuchtungsmodulator 3 hat für jede der drei Farben rot, grün und blau während der Einzelbilddauer T verschiedene Zeitabschnitte, die in Verbindung mit Fig. 15 erläutert werden. Aufgrund der angenommenen Drehfrequenz von 120 Hz für das Farbrad 15, ergeben sich für jede der drei Farben rot, grün und blau vier Farbdurchgänge pro Einzelbilddauer T, wie schematisch in Fig. 15 gezeigt ist. Die Farbdurchgänge werden mit R für rot, G für grün und B für blau bezeichnet. Nachfolgend wird im Detail auf die Farbe rot eingegangen. Gleiches gilt jedoch für die Farben grün und blau.

Da die einzelnen Zeitabschnitte (die auch als Zeitslots bezeichnet werden können), für die erste und zweite vollständige Umdrehung des Farbrades 15 während einer Einzelbilddauer T gleich verteilt sind, wird nur die erste Umdrehung des Farbrades 15 im Detail beschrieben.

Im unteren Teil von Fig. 15 ist daher der erste und zweite Farbdurchgang für rot mit einer vergrößerten zeitlichen Skala dargestellt. Daraus ist ersichtlich, dass jeder Farbdurchgang in fünf gleich lange Zeitabschnitte aufgeteilt ist, die mit 1/2, 2, 3, 4 und 5 bzw. 2/2, 2, 3, 4 und 5 bezeichnet sind. Es gibt während eines Farbdurchgangs somit sechs unterschiedliche Zeitabschnitte (1/2, 2/2, 2, 3, 4 und 5). Für jeden Zeitabschnitt kann anhand der Beleuchtungssteuerdaten BS für jedes Beleuchtungspixel individuell eingestellt werden, ob es eingeschaltet ist (= 1 und entspricht der Beleuchtung der zugeordneten Bildpixel) oder ob es ausgeschaltet ist (=0 und entspricht keiner aktiven Beleuchtung der zugeordneten Bildpixel).

Ferner wird angenommen, dass die Beleuchtungssteuerdaten MS die Werte 0, 1/2, L oder H aufweisen können.

Dabei bedeutet 0, dass das entsprechende Beleuchtungspixel während der gesamten Einzelbilddauer T ausgeschaltet ist. Der Wert 1/2 bedeutet, dass nur der Zeitabschnitt 1/2 zur Beleuchtung benutzt wird, wobei damit Grauwerte von 1 bis 12 darstellbar sind. Der Wert L bedeutet, dass nur die Zeitabschnitte 2/2, 2, 3, 4 und 5 zur Beleuchtung benutzt werden, wobei damit Grauwerte von 13 bis 229 darstellbar sind. Der Wert H bedeutet, dass alle Zeitabschnitte 1/2, 2/2, 2, 3, 4 und 5 zur Beleuchtung benutzt werden, wobei damit Grauwerte von größer oder gleich 230 darstellbar sind.

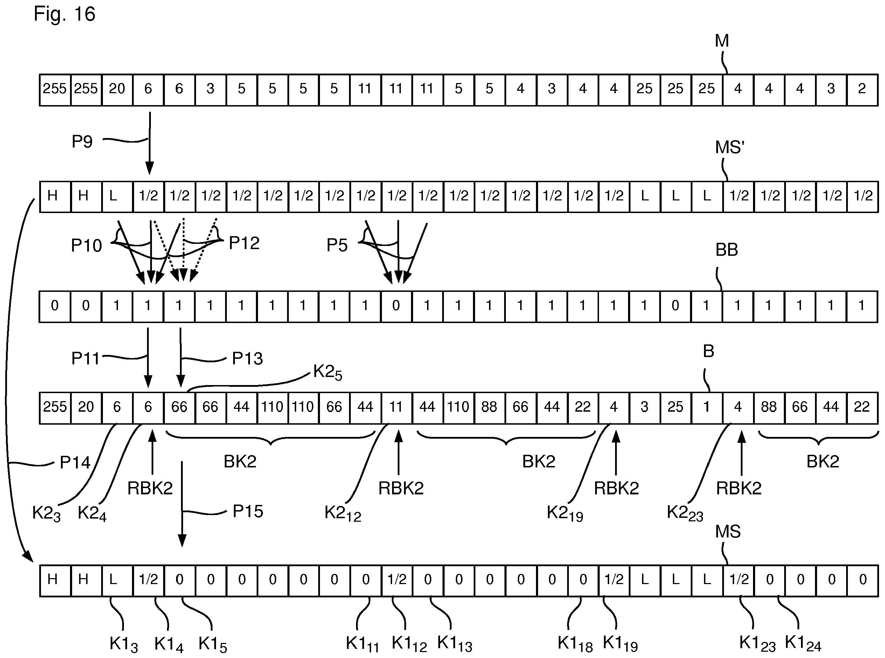

Wie nun in Fig. 16 gezeigt ist, werden aus den Musterdaten M vorläufige Beleuchtungssteuerdaten MS' erzeugt, wobei die beschriebenen möglichen Werte der Beleuchtungssteuerdaten MS den einzelnen Pixeln zugewiesen werden (Pfeil P9).

Dann wird für jedes boostbare Pixel (Pixel mit dem Wert 1 in den Boostdaten BB) ermittelt, ob die Werte der vorläufigen Beleuchtungssteuerdaten MS' der jeweils zugeordneten drei Pixeln keine anderen Werte außer 0 und 1/2 aufweisen. Wenn dies nicht der Fall ist, wird der Grauwert in den Einzelbilddaten B nicht geboostet und somit unverändert übernommen. Dies ist durch die Pfeile P10 und P11 angedeutet, wobei der linke Pfeil der Pfeile P10 zeigt, dass der Wert L in den vorläufigen Beleuchtungssteuerdaten MS' dem boostbaren Pixel zugeordnet ist, so dass der Grauwert nicht geboostet wird.

Bei dem boostbaren Pixel, dessen zugeordneten Pixelwerte der vorläufigen Beleuchtungssteuerdaten MS' durch die Pfeile P12 hervorgehoben sind, sind alle Pixelwerte aus der Gruppe, die die Werte 0 und 1/2 umfasst. Daher ist der entsprechende Grauwert von 3 gemäß den Bilddaten BD auf 66 (aufgrund des Boostfaktors 22) erhöht.

Die Beleuchtungssteuerdaten MS werden dann basierend auf den vorläufigen Beleuchtungssteuerdaten MS' und den Bilddaten B so erzeugt, dass für geboostete Pixel das zugeordnete Hauptbeleuchtungspixel auf 0 gesetzt wird und die restlichen Beleuchtungspixel den gleichen Wert wie in den vorläufigen Beleuchtungssteuerdaten MS' aufweisen, wie durch die Pfeile P14 und P15 angedeutet ist.

Wie ein Vergleich der Bilddaten B gemäß Fig. 16 mit den Bilddaten B gemäß Fig. 14 zeigt, können mehr boostbare Pixel geboostet werden. Ferner kann z.B. das linke Randpixel $K2_4$ über sein zugeordnetes Hauptbeleuchtungspixel $K1_4$ normal beleuchtet werden (Beleuchtungssteuerdatenwert 1/2), da das direkt benachbarte geboostete Bildpixel $K2_5$ mit dem geboosteten Grauwert von 66 nur zu solchen Zeiten in seinen An-Zustand geschaltet wird, die nicht mit dem Zeitslot 1/2 zusammenfallen. Dies ist für die Kippspiegel $K1_4$, $K1_5$, $K2_4$ und $K2_5$ schematisch in den vier Darstellungen Fig. 17a, 17b, 17c und 17d für die Farbe rot in gleicher Weise wie in der unteren Darstellung von Fig. 15 gezeigt.

Fig. 17a und 17b zeigen die Zeiten, zu denen die Kippspiegel $K1_4$ und $K1_5$ zur Beleuchtung eingeschaltet (= 1) und ausgeschaltet (= 0) sind. Der Kippspiegel $K1_4$ ist während des Zeitslots 1/2 eingeschaltet und während der restlichen Zeitslots ausgeschaltet. Der Kippspiegel $K1_5$ ist durchgehend ausgeschaltet.

Der Kippspiegel $K2_4$ (= Bildpixel $K2_4$) wird während des Zeitslots 1/2 eingeschaltet, um den Grauwert 6 zu modulieren. Dies ist durch eine Schraffur angedeutet, da der Kippspiegel $K2_4$ nicht während des gesamten Zeitslots 1/2 im Ein-Zustand (= 1) stehen muss. Während der anderen Zeitslots 2/2, 2, 3, 4 und 5 ist der Kippspiegel $K2_4$ dauernd im Aus-Zustand (= 0).

Der Kippspiegel $K2_5$ (= Bildpixel $K2_5$) wird während des Zeitslots 2/2 eingeschaltet, um den Grauwert 66 zu modulieren. Dies ist durch eine Schraffur angedeutet, da der Kippspiegel $K2_5$ nicht während des gesamten Zeitslots 2/2 im Ein-Zustand (= 1) stehen muss. Während der anderen Zeitslots 1/2, 2, 3, 4 und 5 ist der Kippspiegel $K2_5$ dauernd im Aus-Zustand (= 0).

Wie diesen Darstellungen in Fig. 17a- 17d entnommen werden kann, beeinflusst das nicht zu vermeidende Beleuchtungsstreulicht des Kippspiegels $K1_4$ (bzw. weitergeleitetes Beleuchtungsrestlicht, obwohl der Kippspiegel $K1_4$ im Aus-Zustand steht), das während des Zeitslots 1/2 auf den Kippspiegel $K2_5$ fällt, nicht die Modulation des Kippspiegels $K2_5$ für den geboosteten Grauwert 66, da das Streulicht nur während eines Zeitabschnitts auf den Kippspiegel $K2_5$ fällt, in dem der Kippspiegel $K2_5$ auf aus steht und nicht zur Modulation in den Ein-Zustand geschaltet wird. Es liegt somit eine zeitliche Trennung der Beleuchtung am Rand des geboosteten Bereiches vor, wodurch mehr boostbare Pixel geboostet werden können und die Helligkeit des Randpixels K2 besser an die Helligkeit der benachbarten ungeboosteten Pixel (z.B. Pixel $K2_3$) angepasst ist (siehe Fig. 16) im Vergleich zu der Ausführungsform gemäß Fig. 12-14.

Bei der Variante gemäß Fig. 16 werden die Randpixel RBK2 zumindest mittels des zugeordneten Hauptbeleuchtungspixels $K1_4$, $K1_{12}$, $K1_{19}$ und $K1_{23}$ beleuchtet. Jedoch ist die Beleuchtung (Pixel $K1_5$, $K1_{11}$, $K1_{13}$, $K1_{18}$ sowie $K1_{24}$) für das unmittelbar benachbarte geboostete Pixel $K2_5$, $K2_{11}$, $K2_{13}$, $K2_{18}$ und $K2_{24}$ auf Null gesetzt, was zu einer nicht optimalen Beleuchtung der Randpixel RBK2 ($K2_4$, $K2_{12}$, $K2_{19}$ und $K2_{23}$) führt.

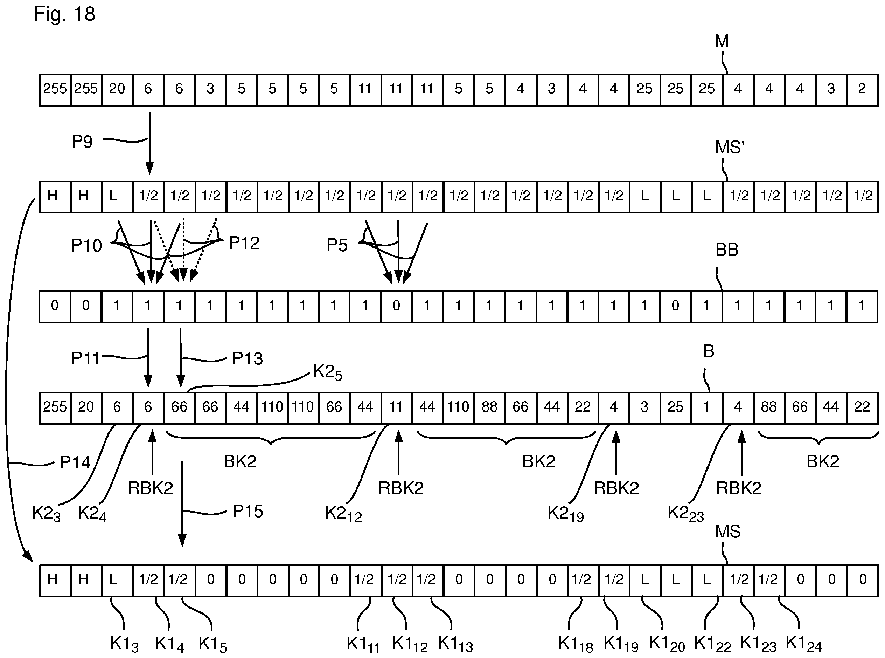

Da bei der hier beschriebenen Ausführungsform der Schwellwert 10 und der Boostfaktor 22 beträgt, ist der maximale Helligkeitswert eines geboosteten Pixels 220. Dieser Helligkeitswert lässt sich mit den Zeitabschnitten 2/2, 2, 3, 4 und 5 für den Beleuchtungsmodulator 3 darstellen, so dass der Zeitabschnitt 1/2 nicht benötigt wird. Das bedeutet aber, dass der Zeitabschnitt 1/2 auch für Hauptbeleuchtungspixel von geboosteten Bildpixeln gesetzt werden kann. Dies wird in einer Weiterbildung der in Verbindung mit Fig. 16 beschriebenen Ausführungsform in der Art genutzt, dass alle drei zugeordneten Beleuchtungspixel eines jeden Randpixels RBK2 zumindest auf 1/2 gesetzt werden. Dies ist in Fig. 18 gezeigt, die im Wesentlichen Fig. 16 entspricht. Es wird daher zur Beschreibung von Fig. 18 auf die obigen Ausführungen verwiesen. Im Unterschied zu der Ausführungsform von Fig. 16 sind jedoch die Beleuchtungspixel $K1_5$, $K1_{11}$, $K1_{13}$, $K1_{18}$ sowie $K1_{24}$ auf 1/2 gesetzt, so dass die entsprechenden Randbildpixel $K2_4$, $K2_{12}$, $K2_{19}$ und $K2_{23}$ jeweils durch alle drei zugeordneten Beleuchtungspixel beleuchtet werden und somit eine ausreichende Beleuchtung sichergestellt werden kann. Die Anpassung der Helligkeit der beleuchtete Randpixel RBK2 an die Helligkeit der benachbarten ungeboosteten Pixel ist somit im Vergleich zur Ausführungsform gemäß Fig. 16 nochmals verbessert.

Wie bereits beschrieben wurde, sind der Schwellwert und der Boostfaktor so gewählt, dass der maximale Helligkeitswert eines geboosteten Pixels 220 beträgt, damit alle Boostwerte ohne den Zeitabschnitt 1/2 dargestellt werden können. Es ist jedoch auch möglich, den Schwellwert und/oder den Boostfaktor so festzulegen, dass für geboostete Pixel Helligkeitswerte vorliegen, die größer als 220 sind und für die somit der Zeitabschnitt 1/2 benötigt werden würde. In diesem Fall kann man beispielsweise Boostwerte von größer als 220 nur mit dem Helligkeitswert 220 darstellen. Der Unterschied bei der hohen Helligkeit ist für einen Betrachter nicht wahrnehmbar. Ferner oder alternativ ist es möglich, auch Boostwerte von größer als 220 unter Einsatz des Zeitabschnitts 1/2 darzustellen, wenn alle zugeordneten ersten Pixel während der gesamten Einzelbilddauer in den zweiten Zustand geschaltet sind. Dies trifft insbesondere für geboostete Pixel zu, deren Nachbarn und eventuell weitere Nachbarn auch alle geboostete Pixel sind.

Bei der bisherigen Beschreibung wurden nur die direkten Nachbarpixel des Hauptbeleuchtungspixel des ersten Modulators 3 berücksichtigt, so dass bei den Darstellungen gemäß Fig. 12-14, 16, 17a - 17d und 18 stets drei erste Pixel ($K1_3$, $K1_4$ und $K1_5$) für ein zweites Pixel ($K2_4$) bei der Zeilendarstellung betrachtet werden, was gemäß Fig. 11 bei Berücksichtigung der flächigen Ausbildung der Modulatoren 3, 5 neun ersten Pixeln des Bildmodulators 5 ($K1_{34}$, $K1_{35}$, $K1_{36}$, $K1_{44}$, $K1_{45}$, $K1_{46}$, $K1_{54}$, $K1_{55}$, $K1_{56}$) für ein zweites Pixel ($K245$) entspricht. Natürlich können auch weitere Nachbarpixel berücksichtigt werden, so dass z.B. die zwei nächsten Nachbarn berücksichtigt werden. Bei der Zeilendarstellung gemäß Fig. 12-14, 16, 17a -17d und 18 entspricht dies dann fünf ersten Pixeln und bei Berücksichtigung der flächigen Ausbildung der Modulatoren 3, 5 gemäß Fig. 11 sind dies dann 25 erste Pixel.

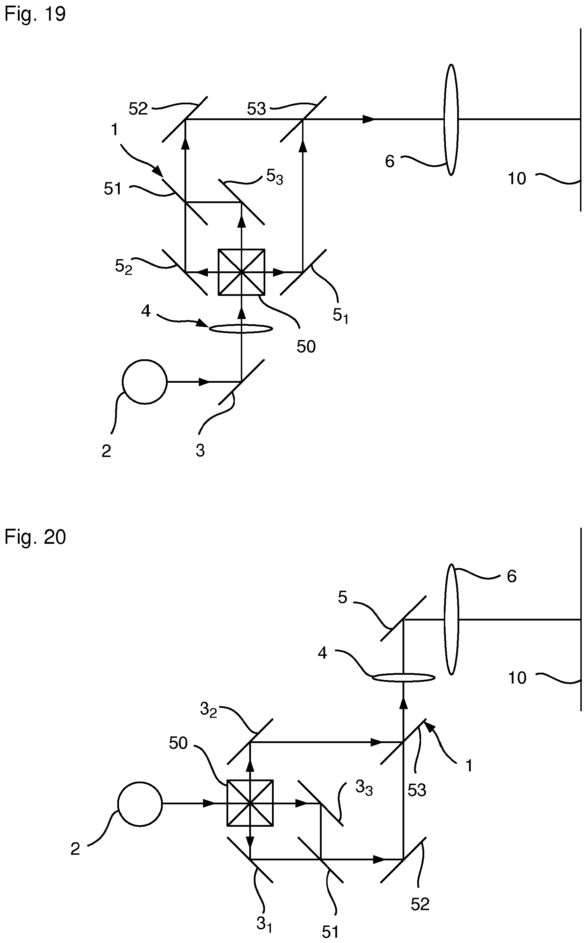

In Fig. 19 ist eine Abwandlung des erfindungsgemäßen Projektors 1 gemäß Fig. 1 gezeigt, wobei gleiche Elemente mit gleichen Bezugszeichen bezeichnet sind. Zur Vereinfachung der Darstellung wurde die Steuereinheit 7 nicht eingezeichnet. Im Unterschied zu dem Projektor gemäß Fig. 1 sind bei dem Projektor von Fig. 19 drei Bildmodulatoren $5_1$, $5_2$ und $5_3$ und ein Farbteilerwürfel 50 vorgesehen. So kann der Bildmodulator $5_1$ mit rotem Licht, der Bildmodulator $5_2$ mit grünem Licht und der Bildmodulator $5_3$ mit blauem Licht beaufschlagt werden. Die Modulation der Bildmodulatoren $5_1$, $5_2$ und $5_3$ und des Beleuchtungsmodulators 3 findet in gleicher Weise wie beim Projektor 1 gemäß Fig. 1 statt. Das von den Bildmodulatoren $5_1$, $5_2$ und $5_3$ modulierte Licht für die Projektion wird über die beiden Farbteiler 51 und 53 und den Umlenkspiegel 52 zu einem gemeinsamen Strahlenbündel überlagert, das mittels der Projektionsoptik 6 auf die Projektionsfläche 10 abgebildet wird.

Die Lichtquelle 2 kann beispielsweise weißes Licht abgeben, das mittels des Beleuchtungsmodulators 3 moduliert wird und dann aufgrund des Farbteilerwürfels 50 wellenlängenabhängig so aufgeteilt wird, dass, wie beschrieben, der Bildmodulator $5_1$ mit rotem Licht, der Bildmodulator $5_2$ mit grünem Licht und der Bildmodulator $5_3$ mit blauem Licht beleuchtet wird. Die Beleuchtung der Bildmodulatoren $5_1$ - $5_3$ kann dabei entweder zeitsequenziell oder gleichzeitig durchgeführt werden. Die Zuordnung der Pixel des Beleuchtungsmodulators 3 zu den Pixeln jedes Bildmodulators $5_1$, $5_2$, $5_3$ kann in gleicher Weise vorliegen wie bei den bereits beschriebenen Ausführungsformen des erfindungsgemäßen Projektors 1.

In Fig. 20 ist eine Abwandlung des erfindungsgemäßen Projektors 1 in gleicher Weise wie in Fig. 19 dargestellt. Im Unterschied zum Projektor gemäß Fig. 19 sind beim Projektor gemäß Fig. 20 drei Beleuchtungsmodulatoren $3_1$, $3_2$ und $3_3$ vorgesehen, die z.B. für rotes Beleuchtungslicht (Beleuchtungsmodulator $3_1$), grünes Beleuchtungslicht (Beleuchtungsmodulator $3_2$) und blaues Beleuchtungslicht (Beleuchtungsmodulator $3_3$) vorgesehen sind und jeweils die entsprechende Farbe modulieren. Die Beaufschlagung der Beleuchtungsmodulatoren $3_1$-$3_3$ mit rotem, grünem und blauem Licht kann über den Farbteilerwürfel 50 erfolgen, der von der Lichtquelle 2 mit weißem Licht beaufschlagt wird. Über die Farbteiler 51 und 53 und den Umlenkspiegel 52 werden das rote, grüne und blaue Beleuchtungslicht, das moduliert ist, auf den Bildmodulator 5 gerichtet. Das vom Bildmodulator 5 modulierte Licht wird über die Projektionsoptik 6 auf die Projektionsfläche 10 abgebildet.

Die Beleuchtungsmodulatoren $3_1$-$3_3$ können so angesteuert werden, dass der Bildmodulator 5 zeitsequenziell mit dem modulierten grünen, blauen und roten Beleuchtungslicht beaufschlagt wird. Alternativ ist es möglich, dass modulierte grüne, blaue und rote Beleuchtungslicht gleichzeitig auf den Bildmodulator 5 zu richten. Die Zuordnung der Pixel jedes Beleuchtungsmodulators $3_1$ - $3_3$ zu den Pixeln des Bildmodulators 5 kann in gleicher Weise vorliegen wie bei den bereits beschriebenen Ausführungsformen des erfindungsgemäßen Projektors 1.

Der erfindungsgemäße Projektor 1 kann somit ausgebildet sein, dass N erste Modulatoren (wobei N eine ganze Zahl größer als 1 ist) auf einen zweiten Modulator abgebildet werden (bei Fig. 19 ist N=3) oder dass ein erster Modulator auf M zweite Modulatoren (wobei M eine ganze Zahl größer als 1 ist) abgebildet wird (bei Fig. 20 ist M=3). Ferner kann der erfindungsgemäße Projektor 1 so ausgebildet sein, dass N1 erste Modulatoren auf M1 zweite Modulatoren abgebildet werden, wobei N1 und M1 jeweils ganze Zahlen größer oder gleich 1 sind (N1 und M1 können gleich oder verschieden sein).

**Patentansprüche**

**1.** Projektor zum Projizieren von Bildern, mit

einem ersten Modulator (3), der mit Licht einer Lichtquelle (2) beaufschlagbar ist, und einem zweiten Modulator (5), der dem ersten Modulator (3) nachgeordnet ist,

einer Abbildungsoptik (4), die den ersten Modulator (3) auf den zweiten Modulator (5) abbildet,

wobei der erste Modulator (3) mehrere in Zeilen und Spalten angeordnete erste Pixel (K1) und der zweite Modulator (5) mehrere in Zeilen und Spalten angeordnete zweite Pixel (K2) aufweist,

wobei die ersten und zweiten Pixel (K1, K2) voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar sind, um das Licht zur Erzeugung der Bilder pixelindividuell zu modulieren,

wobei der Projektor (1) ferner eine Projektionsoptik (6), die vom zweiten Modulator (5) kommendes Licht auf eine Projektionsfläche (10) abbildet, um die Bilder zu projizieren,

und eine Steuereinheit (7), die die beiden Modulatoren (3, 5) anhand von zugeführten Bilddaten (BD) ansteuert, aufweist,

wobei jedem zweiten Pixel (K2; $K2_4$) mindestens ein erstes Pixel (K1; $K1_3$, $K1_4$, $K1_5$) in der Art zugeordnet ist, dass die Abbildungsoptik (4) das zweite Pixel (K2; K24)

a) mit Licht vom jeweils zugeordneten ersten Pixel (K1; $K1_3$, $K1_4$, $K1_5$) beaufschlagt, wenn das zugeordnete erste Pixel (K1; $K1_3$, $K1_4$, $K1_5$) in den ersten Zustand geschaltet ist, um das zweite Pixel (K2; $K2_4$) aktiv zu beleuchten, und

b) nicht mit Licht vom jeweils zugeordneten ersten Pixel (K1; $K1_3$, $K1_4$, $K1_5$) beaufschlagt, wenn das zugeordnete erste Pixel (K1; $K1_3$, $K1_4$, $K1_5$) in den zweiten Zustand geschaltet ist, um das zweite Pixel (K2; $K2_4$) nicht aktiv zu beleuchten, so dass nur nicht zu vermeidendes Restlicht auf das zweite Pixel (K2; $K2_4$) fällt,

**dadurch gekennzeichnet, dass**

die Steuereinheit (7) die Modulatoren (3, 5) so ansteuert, dass für zumindest ein zweites Pixel (K2; $K2_4$), das gemäß den Bilddaten einen Helligkeitswert darstellen soll, der größer als Null sowie kleiner oder gleich einem vorbestimmten ersten Schwellwert ist, das bzw. die zugeordneten ersten Pixel (K1; $K1_3$, $K1_4$, $K1_5$) mindestens zu den Zeitabschnitten, in denen das zweite Pixel (K2; $K2_4$) in den ersten Zustand geschaltet wird, in den zweiten Zustand geschaltet ist bzw. sind, so dass keine aktive Beleuchtung erfolgt und das zweite Pixel (K2; $K2_4$) das Restlicht moduliert.

2. Projektor nach Anspruch 1, **dadurch gekennzeichnet, dass**
die Steuereinheit (7) das das Restlicht modulierende zweite Pixel (K2; $K2_4$) basierend auf einem erhöhten Helligkeitswert, der größer ist als der Helligkeitswert gemäß den Bilddaten (BD), ansteuert.

3. Projektor nach Anspruch 2, bei dem der erhöhte Helligkeitswert mindestens das 10-fache des Helligkeitswerts gemäß den Bilddaten (BD) bei einer angenommenen Unterteilung des Bereiches von minimaler bis maximaler Helligkeit in 256 Stufen entspricht.

4. Projektor nach einem der obigen Ansprüche, bei dem die Steuereinheit (7) die beiden Modulatoren (3, 5) mittels pulsweitenmodulierter Steuerdaten (MS, WS) ansteuert.

5. Projektor nach einem der obigen Ansprüche, bei dem die Steuereinheit (7) das zumindest eine zweite Pixel (K2), das das Restlicht moduliert, durch folgende Schritte bestimmt:

a) es wird zumindest ein zweites Pixel (K2) ausgewählt, dessen durch die Bilddaten (BD) vorgegebener Helligkeitswert größer als Null und kleiner oder gleich dem ersten Schwellwert ist, und

b) es wird ein ausgewähltes zweites Pixel (K2) als ein das Restlicht modulierendes zweites Pixel (K2) dann bestimmt, wenn alle zugeordneten ersten Pixel (K1) aufgrund der Bilddaten (BD) jeweils gemäß eines Helligkeitswertes angesteuert werden, der kleiner ist als ein vorbestimmter zweiter Schwellwert,

wobei der zweite Schwellwert so gewählt ist, dass sich der bzw. die Zeitabschnitte, zu denen die ersten Pixel (K1) in den ersten Zustand zu schalten sind, nicht mit dem oder den Zeitabschnitten überlappen, zu denen das das Restlicht modulierende zweite Pixel in den ersten Zustand zu schalten ist, um das Restlicht zu modulieren.

6. Projektor nach Anspruch 5, bei dem die Steuereinheit (7) den Schritt b) für ein im Schritt a) ausgewähltes zweites Pixel (K2) nur ausführt, wenn zumindest eines von k Nachbarpixeln (K2) des ausgewählten zweiten Pixels (K2) einen durch die Bilddaten (BD) vorgegebenen Helligkeitswert aufweist, der größer als der erste Schwellwert ist wobei k eine natürliche Zahl größer oder gleich 1 ist.

**7.** Projektor nach einem der obigen Ansprüche, bei dem jedem zweiten Pixel (K2) genau ein erstes Pixel (K1) zugeordnet ist.

**8.** Projektor nach einem der Ansprüche 1 bis 5, bei dem jedem zweiten Pixel (K2) ein erstes Pixel sowie zumindest ein diesem ersten Pixel direkt benachbartes weiteres erstes Pixel zugeordnet sind.

**9.** Projektor nach einem der obigen Ansprüche, bei dem die Steuereinheit (7) für zweite Pixel (K2), die gemäß den Bilddaten (BD) ein Helligkeitswert darstellen sollen, der größer ist als der erste Schwellwert, die Resthelligkeit in der Weise berücksichtigt, dass das zweite Pixel basierend auf einem verringerten Helligkeitswert, der niedriger ist als der Helligkeitswert gemäß den Bilddaten, angesteuert wird.

**10.** Projektor zum Projizieren von Bildern, mit
einem ersten Modulator (3), der mit Licht einer Lichtquelle (2) beaufschlagbar ist, und einem zweiten Modulator (5), der dem ersten Modulator (3) nachgeordnet ist,
einer Abbildungsoptik (4), die den ersten Modulator (3) auf den zweiten Modulator (5) abbildet,
wobei der erste Modulator (3) mehrere in Zeilen und Spalten angeordnete erste Pixel (K1) und der zweite Modulator (5) mehrere in Zeilen und Spalten angeordnete zweite Pixel (K2) aufweist,
wobei die ersten und zweiten Pixel (K1, K2) voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar sind, um das Licht zur Erzeugung der Bilder pixelindividuell zu modulieren,
wobei der Projektor (1) ferner eine Projektionsoptik (6), die vom zweiten Modulator (5) kommendes Licht auf eine Projektionsfläche (10) abbildet, um die Bilder zu projizieren,
und eine Steuereinheit (7), die die beiden Modulatoren (3, 5) anhand von zugeführten Bilddaten (BD) ansteuert, aufweist,
wobei jedem zweiten Pixel (K2; $K2_4$) mindestens ein erstes Pixel (K1; $K1_3$, $K1_4$, $K1_5$) in der Art zugeordnet ist, dass die Abbildungsoptik (4) das zweite Pixel (K2; $K2_4$)

a) mit Licht vom jeweils zugeordneten ersten Pixel (K1; $K1_3$, $K1_4$, $K1_5$) beaufschlagt, wenn das zugeordnete erste Pixel (K1; $K1_3$, $K1_4$, $K1_5$) in den ersten Zustand geschaltet ist, um das zweite Pixel (K2; $K2_4$) aktiv zu beleuchten, und
b) nicht mit Licht vom jeweils zugeordneten ersten Pixel (K1; $K1_3$, $K1_4$, $K1_5$) beaufschlagt, wenn das zugeordnete erste Pixel (K1; $K1_3$, $K1_4$, $K1_5$) in den zweiten Zustand geschaltet ist, um das zweite Pixel (K2; $K2_4$) nicht aktiv zu beleuchten, so dass nur nicht zu vermeidendes Restlicht auf das zweite Pixel (K2; $K2_4$) fällt,

**dadurch gekennzeichnet, dass**
die Steuereinheit (7) die Modulatoren (3, 5) so ansteuert, dass für zumindest ein zweites Pixel (K2; $K2_4$), das gemäß den Bilddaten einen Helligkeitswert darstellen soll, der größer als Null sowie kleiner oder gleich einem vorbestimmten ersten Schwellwert ist, das zumindest eine zweite Pixel in den zweiten Zustand geschaltet wird und das bzw. die zugeordneten ersten Pixel (K1; $K1_3$, $K1_4$, $K1_5$) nur während des oder der Zeitabschnitte, in denen das zweite Pixel (K2; $K2_4$) in den zweiten Zustand geschaltet wird, zur Helligkeitsmodulation in den ersten Zustand geschaltet wird bzw. werden, so dass dann vom zumindest einen zweiten Pixel moduliertes Restlicht ausgeht, das zur Bilderzeugung beiträgt.

**11.** Projektor nach Anspruch 10, **dadurch gekennzeichnet, dass**
die Steuereinheit (7) zur Erzeugung des modulierten Restlichtes das bzw. die zugeordneten ersten Pixel basierend auf einem erhöhten Helligkeitswert, der größer ist als der Helligkeitswert gemäß den Bilddaten (BD), ansteuert.


**Claims**

**1.** Projector for projecting images, with
a first modulator (3) which can be struck with light from a light source (2) and a second modulator (5) which is arranged downstream of the first modulator (3),
an imaging optical system (4) which images the first modulator (3) onto the second modulator (5),
wherein the first modulator (3) comprises multiple first pixels (K1) arranged in rows and columns and the second modulator (5) comprises multiple second pixels (K2) arranged in rows and columns,
wherein the first and second pixels (K1, K2) can be switched independently of each other in each case into a first state, in which light incident on them is used to generate an image, and into a second state, in which light incident on them is not used to generate an image, in order to modulate the light for generating the images pixel-by-pixel, wherein the projector (1) furthermore comprises a projection optical system (6) which images light coming from the second modulator (5) onto a projection surface (10) in order to project the images, and a control unit (7), which controls the two modulators (3, 5) on the basis of supplied image data (BD), wherein at least one first pixel (K1; $K1_3$, $K1_4$, $K1_5$) is assigned to each second pixel (K2; $K2_4$) such that the imaging optical system (4)

a) strikes the second pixel (K2; $K2_4$) with light from the respective assigned first pixel (K1; $K1_3$, $K1_4$, $K1_5$) when the assigned first pixel (K1 ; $K1_3$, $K1_4$, $K1_5$) is switched into the first state, in order to illuminate the second pixel (K2; $K2_4$) actively, and
b) does not strike the second pixel (K2; $K2_4$) with light from the respective assigned first pixel (K1; $K1_3$, $K1_4$, $K1_5$) when the assigned first pixel (K1; $K1_3$, $K1_4$, $K1_5$) is switched into the second state, in order not to illuminate the second pixel (K2; $K2_4$) actively, with the result that only unavoidable residual light is incident on the second pixel (K2; $K2_4$),

**characterized in that**
the control unit (7) controls the modulators (3, 5) such that, for at least one second pixel (K2; $K2_4$) which according to the image data is to represent a brightness value which is greater than zero and less than or equal to a predetermined first threshold value, the assigned first pixel(s) (K1 ; $K1_3$, $K1_4$, $K1_5$) is or are switched into the second state at least for the periods in which the second pixel (K2; $K2_4$) is switched into the first state, with the result that no active illumination takes place and the second pixel (K2; $K2_4$) modulates the residual light.

2. Projector according to claim 1, **characterized in that**
the control unit (7) actuates the second pixel (K2; $K2_4$) modulating the residual light on the basis of an increased brightness value which is greater than the brightness value according to the image data (BD).

3. Projector according to claim 2, in which the increased brightness value corresponds to at least 10 times the brightness value according to the image data (BD) with an assumed subdivision of the range from minimum to maximum brightness into 256 increments.

4. Projector according to any of the above claims, in which the control unit (7) controls the two modulators (3, 5) by means of pulse-width modulated control data (MS, WS).

5. Projector according to any of the above claims, in which the control unit (7) determines the at least one second pixel (K2), which modulates the residual light, by means of the following steps:

a) at least one second pixel (K2) is selected, the brightness value of which, prespecified by the image data (BD), is greater than zero and less than or equal to the first threshold value, and
b) a selected second pixel (K2) is determined to be a second pixel (K2) modulating the residual light when all the assigned first pixels (K1) are actuated on the basis of the image data (BD) in each case according to a brightness value which is less than a predetermined second threshold value,

wherein the second threshold value is selected such that the period(s) for which the first pixels (K1) are to be switched into the first state do(es) not overlap with the period(s) for which the second pixel modulating the residual light is to be switched into the first state, in order to modulate the residual light.

6. Projector according to claim 5, in which the control unit (7) only carries out step b) for a second pixel (K2) selected in step a) when at least one of k neighbouring pixels (K2) of the selected second pixel (K2) has a brightness value, prespecified by the image data (BD), which is greater than the first threshold value, wherein k is a natural number greater than or equal to 1.

7. Projector according to any of the above claims, in which precisely one first pixel (K1) is assigned to each second pixel (K2).

8. Projector according to any of claims 1 to 5, in which a first pixel as well as at least one further first pixel which is directly adjacent to this first pixel are assigned to each second pixel (K2).

9. Projector according to any of the above claims, in which the control unit (7), for second pixels (K2) which according to the image data (BD) are to represent a brightness value which is greater than the first threshold value, takes into account the residual brightness in such a way that the second pixel is actuated on the basis of a reduced brightness value which is lower than the brightness value according to the image data.

10. Projector for projecting images, with
a first modulator (3) which can be struck with light from a light source (2) and a second modulator (5) which is arranged downstream of the first modulator (3),
an imaging optical system (4) which images the first modulator (3) onto the second modulator (5),
wherein the first modulator (3) comprises multiple first pixels (K1) arranged in rows and columns and the second modulator (5) comprises multiple second pixels (K2) arranged in rows and columns,
wherein the first and second pixels (K1, K2) can be switched independently of each other in each case into a first state, in which light incident on them is used to generate an image, and into a second state, in which light incident on them is not used to generate an image, in order to modulate the light for generating the images pixel-by-pixel,
wherein the projector (1) furthermore comprises a projection optical system (6) which projects light coming from the second modulator (5) onto a projection surface (10) in order to project the images,
and a control unit (7), which controls the two modulators (3, 5) on the basis of supplied image data (BD),
wherein at least one first pixel (K1; $K1_3$, $K1_4$, $K1_5$) is assigned to each second pixel (K2; $K2_4$) such that the imaging optical system (4)

a) strikes the second pixel (K2; $K2_4$) with light from the respective assigned first pixel (K1; $K1_3$, $K1_4$, $K1_5$) when the assigned first pixel (K1; $K1_3$, $K1_4$, $K1_5$) is switched into the first state, in order to illuminate the second pixel (K2; $K2_4$) actively, and
b) does not strike the second pixel (K2; $K2_4$) with light from the respective assigned first pixel (K1; $K1_3$, $K1_4$, $K1_5$) when the assigned first pixel (K1; $K1_3$, $K1_4$, $K1_5$) is switched into the second state, in order not to illuminate the second pixel (K2; $K2_4$) actively, with the result that only unavoidable residual light is incident on the second pixel (K2; $K2_4$),

**characterized in that**
the control unit (7) controls the modulators (3, 5) such that, for at least one second pixel (K2; $K2_4$) which according to the image data is to represent a brightness value which is greater than zero and less than or equal to a predetermined first threshold value, the at least one second pixel is switched into the second state and for brightness modulation the assigned first pixel(s) (K1; $K1_3$, $K1_4$, $K1_5$) is or are switched into the first state only during the period(s) in which the second pixel (K2; $K2_4$) is switched into the second state, with the result that modulated residual light then emanates from the at least one second pixel, which contributes to the generation of an image.

11. Projector according to claim 10, **characterized in that**
in order to generate the modulated residual light, the control unit (7) actuates the assigned first pixel(s) on the basis of an increased brightness value which is greater than the brightness value according to the image data (BD).

**Revendications**

1. Projecteur permettant de projeter des images, comprenant
un premier modulateur (3) qui peut être alimenté par la lumière d'une source de lumière (2), et un deuxième modulateur (5) placé en aval du premier modulateur (3),
une optique de reproduction (4) qui reproduit le premier modulateur (3) sur le deuxième modulateur (5),
le premier modulateur (3) présentant plusieurs premiers pixels (K1) disposés en rangées et colonnes, et le deuxième modulateur (5) présentant plusieurs deuxièmes pixels (K2) disposés en rangées et colonnes,
les premiers et deuxièmes pixels (K1, K2) pouvant être commutés indépendamment les uns des autres, respectivement dans un premier état dans lequel la lumière incidente sur ceux-ci est utilisée pour former une image, et dans un deuxième état dans lequel la lumière incidente sur ceux-ci ne sert pas à la formation d'image, afin de moduler la lumière pour la génération des images individuellement par pixel,
le projecteur (1) présentant en outre une optique de projection (6) qui reproduit sur une surface de projection (10) de la lumière provenant du deuxième modulateur (5) afin de projeter les images,
et présentant une unité de commande (7) qui pilote les deux modulateurs (3, 5) à l'aide de données d'image fournies (BD),
dans lequel chaque deuxième pixel (K2; $K2_4$) est associé à au moins un premier pixel (K1; $K1_3$, $K1_4$, $K1_5$) de telle sorte que l'optique de reproduction (4)

a) alimente le deuxième pixel (K2 ; K2$_4$) par la lumière du premier pixel (K1 ; K1$_3$, K1$_4$, K1$_5$) respectivement associé, si le premier pixel (K1 ; K1$_3$, K1$_4$, K1$_5$) associé est commuté dans le premier état, afin d'éclairer activement le deuxième pixel (K2 ; K2$_4$), et

b) ne l'alimente pas par la lumière du premier pixel (K1 ; K1$_3$, K1$_4$, K1$_5$) respectivement associé, si le premier pixel (K1 ; K1$_3$, K1$_4$, K1$_5$) associé est commuté dans le deuxième état, afin de ne pas éclairer activement le deuxième pixel (K2 ; K2$_4$) de sorte que seule de la lumière résiduelle inévitable tombe sur le deuxième pixel (K2 ; K2$_4$),

**caractérisé en ce que** l'unité de commande (7) pilote les modulateurs (3, 5) de telle sorte que pour au moins un deuxième pixel (K2 ; K2$_4$), qui doit selon les données d'image représenter une valeur de luminosité qui est supérieure à zéro et inférieure ou égale à une première valeur seuil prédéterminée, le(s) premier(s) pixel(s) (K1 ; K1$_3$, K1$_4$, K1$_5$) associé(s) est/sont au moins dans les périodes où le deuxième pixel (K2 ; K2$_4$) est commuté dans le premier état, commuté(s) dans le deuxième état de sorte qu'aucun éclairage actif n'est effectué, et le deuxième pixel (K2 ; K2$_4$) module la lumière résiduelle.

2. Projecteur selon la revendication 1, **caractérisé en ce que** l'unité de commande (7) pilote le deuxième pixel (K2 ; K2$_4$) modulant la lumière résiduelle sur la base d'une valeur de luminosité accrue qui est supérieure à la valeur de luminosité selon les données d'image (BD).

3. Projecteur selon la revendication 2, dans lequel la valeur de luminosité accrue correspond au moins à dix fois la valeur de luminosité selon les données d'image (BD) pour une subdivision adoptée en 256 niveaux de la zone allant de la luminosité minimale à maximale.

4. Projecteur selon l'une quelconque des revendications précédentes, dans lequel l'unité de commande (7) pilote les deux modulateurs (3, 5) au moyen de données de commande (MS, WS) modulées en largeur d'impulsion.

5. Projecteur selon l'une quelconque des revendications précédentes, dans lequel l'unité de commande (7) détermine ledit au moins un deuxième pixel (K2) qui module la lumière résiduelle par les étapes suivantes :

a) au moins un deuxième pixel (K2) est sélectionné dont la valeur de luminosité prédéfinie par les données d'image (BD) est supérieure à zéro et inférieure ou égale à la première valeur seuil, et

b) un deuxième pixel (K2) sélectionné est déterminé comme un deuxième pixel (K2) modulant la lumière résiduelle si tous les premiers pixels (K1) associés sont pilotés sur la base des données d'image (BD) respectivement selon une valeur de luminosité qui est inférieure à une deuxième valeur seuil prédéterminée,

la deuxième valeur seuil étant sélectionnée de telle sorte que la ou les périodes où les premiers pixels (K1) doivent être commutés dans le premier état ne se chevauchent pas avec la ou les périodes où le deuxième pixel modulant la lumière résiduelle doit être commuté dans le premier état, afin de moduler la lumière résiduelle.

6. Projecteur selon la revendication 5, dans lequel l'unité de commande (7) exécute l'étape b) pour un deuxième pixel (K2) sélectionné à l'étape a) uniquement si au moins l'un de k pixels voisins (K2) du deuxième pixel sélectionné (K2) présente une valeur de luminosité prédéfinie par les données d'image (BD) qui est supérieure à la première valeur seuil, k étant un nombre naturel supérieur ou égal à 1.

7. Projecteur selon l'une quelconque des revendications précédentes, dans lequel chaque deuxième pixel (K2) est associé à exactement un premier pixel (K1).

8. Projecteur selon l'une quelconque des revendications 1 à 5, dans lequel, chaque deuxième pixel (K2) est associé à un premier pixel et à au moins un autre premier pixel directement voisin de ce premier pixel.

9. Projecteur selon l'une quelconque des revendications précédentes, dans lequel, pour des deuxièmes pixels (K2) qui doivent selon les données d'image (BD) représenter une valeur de luminosité qui est supérieure à la première valeur seuil, l'unité de commande (7) tient compte de la luminosité résiduelle de telle sorte que le deuxième pixel est piloté sur la base d'une valeur de luminosité réduite qui est inférieure à la valeur de luminosité selon les données d'image.

10. Projecteur permettant de projeter des images, comprenant
un premier modulateur (3) qui peut être alimenté par la lumière d'une source de lumière (2), et un deuxième modulateur (5) placé en aval du premier modulateur (3),

une optique de reproduction (4) qui reproduit le premier modulateur (3) sur le deuxième modulateur (5),

le premier modulateur (3) présentant plusieurs premiers pixels (K1) disposés en rangées et colonnes, et le deuxième modulateur (5) présentant plusieurs deuxièmes pixels (K2) disposés en rangées et colonnes,

les premiers et deuxièmes pixels (K1, K2) pouvant être commutés indépendamment les uns des autres, respectivement dans un premier état dans lequel la lumière incidente sur ceux-ci est utilisée pour former une image, et dans un deuxième état dans lequel la lumière incidente sur ceux-ci ne sert pas à la formation d'image, afin de moduler la lumière pour la génération des images individuellement par pixel,

le projecteur (1) présentant en outre une optique de projection (6) qui reproduit sur une surface de projection (10) de la lumière provenant du deuxième modulateur (5) afin de projeter les images,

et présentant une unité de commande (7) qui pilote les deux modulateurs (3, 5) à l'aide de données d'image fournies (BD),

dans lequel chaque deuxième pixel (K2 ; $K2_4$) est associé à au moins un premier pixel (K1 ; $K1_3$, $K1_4$, $K1_5$) de telle sorte que l'optique de reproduction (4)

a) alimente le deuxième pixel (K2 ; $K2_4$) par la lumière du premier pixel (K1 ; $K1_3$, $K1_4$, $K1_5$) respectivement associé, si le premier pixel (K1 ; $K1_3$, $K1_4$, $K1_5$) associé est commuté dans le premier état, afin d'éclairer activement le deuxième pixel (K2 ; $K2_4$), et

b) ne l'alimente pas par la lumière du premier pixel (K1 ; $K1_3$, $K1_4$, $K1_5$) respectivement associé, si le premier pixel (K1 ; $K1_3$, $K1_4$, $K1_5$) associé est commuté dans le deuxième état, afin de ne pas éclairer activement le deuxième pixel (K2 ; $K2_4$) de sorte que seule de la lumière résiduelle inévitable tombe sur le deuxième pixel (K2 ; $K2_4$),

**caractérisé en ce que** l'unité de commande (7) pilote les modulateurs (3, 5) de telle sorte que pour au moins un deuxième pixel (K2 ; $K2_4$), qui doit selon les données d'image représenter une valeur de luminosité qui est supérieure à zéro et inférieure ou égale à une première valeur seuil prédéterminée, ledit au moins un deuxième pixel est commuté dans le deuxième état, et le (s) premier (s) pixel (s) (K1 ; $K1_3$, $K1_4$, $K1_5$) associé(s) est/sont commuté(s) dans le premier état pour la modulation de luminosité uniquement pendant la ou les périodes où le deuxième pixel (K2 ; $K2_4$) est commuté dans le deuxième état, de sorte que de la lumière résiduelle modulée contribuant à la génération d'image émane dudit au moins un deuxième pixel.

11. Projecteur selon la revendication 10, **caractérisé en ce que** l'unité de commande (7) pilote pour la génération de la lumière résiduelle modulée le(s) premier(s) pixel(s) associé(s) sur la base d'une valeur de luminosité accrue qui est supérieure à la valeur de luminosité selon les données d'image (BD).

Fig. 3

Fig. 4

Fig. 5

**Gamma-Kurven**

normierte, dargestellte Helligkeit [0:1]

1
0,1
0,01
0,001
0,0001
0,00001
0,000001

theoretische Kurve

realer Projektor

Eingabe-Graustufe [0:255]

1        10        100

Fig. 6

201

209

208

204
215
216

202    203

BD

205    206

207    210

Fig. 7

Fig. 8

Fig. 9

**Abweichung projizierter Grauwerte vom Sollwert**

- Fehler (realer Projektor)
- Fehler (DMD Doppelmodulation)

Abweichung Ist-Wert zu Soll-Wert [%]

Eingabe-Graustufe [0:255]

Fig. 10

**Abweichung projizierter Grauwerte vom Sollwert**

- Fehler "S.d.T."
- Fehler "Boost 1"
- Fehler "Boost 2"

Abweichung Ist-Wert zu Soll-Wert [%]

Eingabe-Graustufe [0:255]

Fig. 11

Fig. 12

BD

| 255 | 20 | 6 | 6 | 3 | 3 | 2 | 5 | 5 | 3 | 2 | 11 | 2 | 5 | 4 | 3 | 2 | 1 | 4 | 3 | 25 | 1 | 4 | 4 | 3 | 2 | 1 |

BB

| 0 | 0 | 1 | 1 | 1 | 1 | 1 | 1 | 1 | 1 | 0 | 1 | 1 | 1 | 1 | 1 | 1 | 1 | 1 | 1 | 0 | 1 | 1 | 1 | 1 | 1 | 1 |

P2

Fig. 13

BD

| 255 | 20 | 6 | 6 | 3 | 3 | 2 | 5 | 5 | 3 | 2 | 11 | 2 | 5 | 4 | 3 | 2 | 1 | 4 | 3 | 25 | 1 | 4 | 4 | 3 | 2 | 1 |

P3    P4

M

| 255 | 255 | 20 | 6 | 3 | 5 | 5 | 5 | 5 | 5 | 11 | 11 | 11 | 5 | 4 | 4 | 3 | 4 | 4 | 5 | 25 | 25 | 25 | 4 | 4 | 3 | 2 |

Fig. 14

EP 3 193 502 B1

Fig. 15

Fig. 17a

Fig. 17b

Fig. 17c

Fig. 17d

EP 3 193 502 B1

Fig. 16

M

| 255 | 255 | 20 | 6 | 6 | 3 | 5 | 5 | 5 | 5 | 11 | 11 | 11 | 5 | 5 | 4 | 3 | 4 | 4 | 25 | 25 | 25 | 4 | 4 | 4 | 3 | 2 |

P9

MS'

| H | H | L | 1/2 | 1/2 | 1/2 | 1/2 | 1/2 | 1/2 | 1/2 | 1/2 | 1/2 | 1/2 | 1/2 | 1/2 | 1/2 | 1/2 | 1/2 | 1/2 | L | L | L | 1/2 | 1/2 | 1/2 | 1/2 | 1/2 |

P10          P12          P5

BB

| 0 | 0 | 1 | 1 | 1 | 1 | 1 | 1 | 1 | 1 | 1 | 0 | 1 | 1 | 1 | 1 | 1 | 1 | 1 | 1 | 0 | 1 | 1 | 1 | 1 | 1 | 1 |

P11          P13

K2$_5$

B

| 255 | 20 | 6 | 6 | 66 | 66 | 44 | 110 | 110 | 66 | 44 | 11 | 44 | 110 | 88 | 66 | 44 | 22 | 4 | 3 | 25 | 1 | 4 | 88 | 66 | 44 | 22 |

P14          BK2          BK2          BK2

K2$_3$   K2$_4$   RBK2          RBK2          RBK2          RBK2

P15          K2$_{12}$          K2$_{19}$          K2$_{23}$

MS

| H | H | L | 1/2 | 0 | 0 | 0 | 0 | 0 | 0 | 0 | 1/2 | 0 | 0 | 0 | 0 | 0 | 0 | 1/2 | L | L | L | 1/2 | 0 | 0 | 0 | 0 |

K1$_3$   K1$_4$   K1$_5$          K1$_{11}$ K1$_{12}$ K1$_{13}$          K1$_{18}$ K1$_{19}$          K1$_{23}$ K1$_{24}$

EP 3 193 502 B1

Fig. 18

Fig. 19

Fig. 20

**IN DER BESCHREIBUNG AUFGEFÜHRTE DOKUMENTE**

**In der Beschreibung aufgeführte Patentdokumente**

- WO 2009156129 A1
- US 2015378085 A
- WO 2009156130 A

**In der Beschreibung aufgeführte Nicht-Patentliteratur**

- **D. DOHERTY ; G. HEWLETT.** 10.4: Phased Reset Timing for Improved Digital Micromirror Device (DMD) Brightness. *SID Symposium Digest of Technical Papers,* vol. 29, 125-128